(19)

**Europäisches Patentamt**

**European Patent Office**

**Office européen des brevets**

(11) **EP 4 697 828 A2**

(12) **EUROPEAN PATENT APPLICATION**

(43) Date of publication:
**18.02.2026 Bulletin 2026/08**

(21) Application number: **25227112.7**

(22) Date of filing: **30.09.2021**

(51) International Patent Classification (IPC):
***H04W 72/04*** (2023.01)

(52) Cooperative Patent Classification (CPC):
**H04L 5/0048; H04L 5/0094; H04W 72/04;
H04L 5/001**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(62) Document number(s) of the earlier application(s) in
accordance with Art. 76 EPC:
**21958839.9 / 4 362 585**

(71) Applicant: **GUANGDONG OPPO MOBILE
TELECOMMUNICATIONS
CORP., LTD.
Dongguan, Guangdong 523860 (CN)**

(72) Inventors:
- **SHI, Zhihua
Dongguan, Guangdong, 523860 (CN)**
- **CHEN, Wenhong
Dongguan, Guangdong, 523860 (CN)**

(74) Representative: **Penza, Giancarlo
Bugnion S.p.A.
Viale Lancetti, 17
20158 Milano (IT)**

Remarks:
This application was filed on 23.12.2025 as a
divisional application to the application mentioned
under INID code 62.

(54) **WIRELESS COMMUNICATION METHOD AND DEVICE**

(57) Provided are a wireless communication method and devices. The method includes: receiving first control information sent by a second device, the first control information including a first domain for indicating that a first device is triggered to perform aperiodic sounding reference signal (SRS) transmission on the basis of at least one SRS resource group; and for a first SRS resource group in at least one SRS resource group, performing aperiodic SRS transmission in a first target time slot on the basis of the first SRS resource group, the first SRS resource group being an SRS resource group for which at least one time slot offset is configured in the at least one SRS resource group, the first control information further including a second domain for indicating a first time slot offset corresponding to the first SRS resource group in the at least one time slot offset, and the first target time slot being determined on the basis of the first time slot offset and/or a second time slot offset.

EP 4 697 828 A2

**Description**

TECHNICAL FIELD

The disclosure relates to the field of communication, and more specifically, to a wireless communication method and devices.

BACKGROUND

In the New Radio (NR) system, in order to support various possible deployment scenarios as well as various new types of services in the future, the system is designed to be very flexible. For example, resources for uplink and downlink may be indicated and adjusted by high-level signaling and physical layer signaling. Therefore, a slot or certain symbols on a slot may be used for transmission in different directions at different moments, for example, for uplink transmission at a certain moment, and for downlink transmission at a certain moment.

However, for a Sounding Reference Signal (SRS), the slot offset between the trigger signaling for triggering the SRS transmission and the SRS transmission is configured by high-level signaling, for example, Radio Resource Control (RRC) signaling. That is, the slot offset between each trigger signaling and the SRS transmission is unchanging until the RRC signaling reconfigures the slot offset to another value, which results in the relative position of the slot for receiving the trigger signaling and the slot for sending the SRS being fixed, increases the restrictiveness of the aperiodic SRS triggering and the corresponding SRS transmission, and reduces the flexibility of the system.

SUMMARY

Embodiments of the disclosure provide a wireless communication method and device, which may reduce the restrictiveness of the aperiodic SRS triggering and the corresponding SRS transmission, and improve the flexibility of the system.

Various aspects of the present application are defined in the claims.

The various embodiments of the present application further provide the following solutions.

1. A wireless communication method, applied to a first device, comprising:

receiving first control information sent by a second device;
wherein the first control information comprises a first field, and the first field is configured to indicate to trigger the first device to perform aperiodic sounding reference signal (SRS) transmission based on at least one SRS resource set; and
performing, for a first SRS resource set of the at least one SRS resource set, aperiodic SRS transmission on a first target slot based on the first SRS resource set;
wherein the first SRS resource set is an SRS resource set, which is configured with at least one slot offset, of the at least one SRS resource set; the first control information further comprises a second field; the second field is configured to indicate a first slot offset, which corresponds to the first SRS resource set, of the at least one slot offset; and the first target slot is determined based on at least one of the first slot offset or a second slot offset.

2. The method of solution 1, further comprising:
determining a number of bits occupied by the second field.

3. The method of solution 2, wherein the determining the bits occupied by the second field comprises at least one of:

determining that the second field occupies 0 bit in a case where first indicative information is not received by the first device; or
determining that the second field occupies 0 bit in a case where the second device does not send or configure the first indicative information;
wherein the first indicative information is configured to indicate that the first control information comprises the second field, or the first indicative information is configured to indicate the number of bits occupied by the second field.

4. The method of solution 3, wherein the first indicative information is configured to indicate that the first control information comprises the second field;

wherein the determining the number of bits occupied by the second field comprises:

determining that the second field occupies a first number of bits in a case where the first indicative information is received by the first device.

5. The method of solution 3, wherein the first indicative information is configured to indicate the number of bits occupied by the second field;

wherein the determining the number of bits occupied by the second field comprises at least one of:
determining that the second field occupies a second number of bits in a case where the first indicative information is received by the first device and the first indicative information indicates a first value; or
determining that the second field occupies a third number of bits in a case where the first indicative information is received by the first device and the first indicative information indicates a second value.

6. The method of solution 2, wherein the determining the number of bits occupied by the second field comprises:

determining the number of bits occupied by the second field based on a first configuration field of a second SRS resource set of all SRS resource sets configured with the at least one slot offset;
wherein the first configuration field is configured to provide the at least one slot offset for the SRS resource set.

7. The method of solution 6, wherein the first configuration field is configured by at least one of a list structure, a sequence structure, or a bitmap.
8. The method of solution 6 or 7, wherein the second SRS resource set is an SRS resource set, which has a highest number of slot offsets configured by the first configuration field, of all the SRS resource sets configured with the at least one slot offset.
9. The method of solution 8, wherein the number of bits occupied by the second field and the number of slot offsets configured for the second resource set meet one of:

$$2^a \geq K, \text{ or } 2^a \geq K+1;$$

wherein a represents the number of bits occupied by the second field, and K represents the number of slot offsets configured for the second SRS resource set.
10. The method of any one of solutions 1 to 9, further comprising:
in a case where the number of the at least one slot offset is greater than or equal to a value of the second field, determining an X-th slot offset of the at least one slot offset as the first slot offset, wherein X represents the value of the second field, or X represents the value of the second field plus 1.
11. The method of solution 10, wherein the determining the X-th slot offset of the at least one slot offset as the first slot offset comprises:

determining the X-th slot offset of the at least one slot offset as the first slot offset, in an order from largest to smallest or from smallest to largest; or
determining the X-th slot offset of the at least one slot offset as the first slot offset, in a configuration order of the at least one slot offset.

12. The method of any one of solutions 1 to 9, further comprising:

in a case where the number of the at least one slot offset is greater than or equal to a value of the second field, determining a slot offset corresponding to the value of the second field as the first slot offset based on a first correspondence;
wherein the first correspondence comprises at least one value and a slot offset corresponding to each of the at least one value, and the at least one value comprises the value of the second field.

13. The method of solution 12, wherein the first correspondence is agreed in a protocol or configured by the second device.
14. The method of solution 12, wherein the first correspondence is configured by radio resource control (RRC) signaling, or media access control control element (MAC CE).
15. The method of any one of solutions 1 to 9, further comprising:

in a case where the number of the at least one slot offset is less than or equal to a value of the second field, performing one of:
determining a (mod (Y, N))-th slot offset or a (mod (Y, N) + 1)-th slot offset of the at least one slot offset as the first slot offset, wherein Y represents a value of the second field, or Y represents the value of the second field plus 1, N represents the number of the at least one slot offset, and mod represents a modulo operation;
determining an N-th slot offset of the at least one slot offset as the first slot offset;
determining a first slot offset of the at least one slot offset as the first slot offset;
determining the first slot offset as 0;
sending the first SRS resource set without considering the second field; or
sending the first SRS resource set without considering the first slot offset.

16. The method of solution 15, wherein the determining the (mod (Y, N))-th slot offset or the (mod (Y, N) + 1)-th slot offset of the at least one slot offset as the first slot offset comprises:

determining the (mod (Y, N))-th slot offset or the (mod (Y, N) + 1)-th slot offset of the at least one slot offset as the first slot offset, in an order from largest to smallest or from smallest to largest; or
determining the (mod (Y, N))-th slot offset or the (mod (Y, N) + 1)-th slot offset of the at least one slot offset as the first slot offset, in a configuration order of the at least one slot offset.

17. The method of any one of solutions 1 to 16, wherein each first SRS resource set of the at least one SRS resource set is configured with a same number of slot offsets; or each of the at least one SRS resource set is configured with a same number of slot offsets.
18. The method of any one of solutions 1 to 17, wherein the first SRS resource set is configured with $2^a$ slot offsets, and a represents a number of bits occupied by the second field.
19. The method of any one of solutions 1 to 18, further comprising:

determining the first target slot based on the first slot and the first slot offset;
wherein the first slot is determined by a slot where the first control information is located and the second slot offset.

20. The method of solution 19, wherein the determining the first target slot based on the first slot and the first slot offset comprises:
determining a T-th available slot counting from the first slot or after the first slot as the first target slot, wherein T represents the first slot offset.
21. The method of solution 19, wherein the first device is not configured with a slot offset for a carrier aggregation (CA), and the first slot meets a following condition:

$$n_1 = \left\lfloor n \cdot \frac{2^{\mu_{SRS}}}{2^{\mu_{PDCCH}}} \right\rfloor + k \;;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $n_1$ represents the first slot, and k represents the second slot offset.
22. The method of solution 19, wherein the first device is configured with a slot offset for a carrier aggregation (CA), and the first slot meets a following condition:

$$n_1 = \left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor \;;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N_{\text{slot, offset, PDCCH}}^{\text{CA}}$ and $\mu_{\text{offset,PDCCH}}$ are $N_{\text{slot, offset}}^{\text{CA}}$ and $\mu_{\text{offset}}$ which depend on an upper layer configuration and are configured to receive a slot offset for the carrier aggregation (CA) of the physical downlink control channel (PDCCH), respectively, $N_{slot,offset,SRS}^{CA}$ and $\mu_{offset,SRS}$ are $N_{slot,offset}^{CA}$ and $\mu_{offset}$ which depend on the upper layer configuration and are configured to transmit a slot offset for the carrier aggregation (CA) of the SRS, respectively, $n_1$ represents the first slot, and k represents the second slot offset.

23. The method of any one of solutions 1 to 18, wherein the first device is not configured with a slot offset for a carrier aggregation (CA), and the first target slot meets a following condition:

$$n' = \left\lfloor n \cdot \frac{2^{\mu_{SRS}}}{2^{\mu_{PDCCH}}} \right\rfloor + k + z \quad ;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, n' represents the first target slot, k represents the second slot offset, and z represents a number of slots to be offset determined based on the first slot offset.

24. The method of solution 23, wherein the z representing the number of slots to be offset determined based on the first slot offset comprises: z representing a T-th available slot counting from $n_1$ or after $n_1$;

wherein T represents the first slot offset and $n_1$ meets a following condition:

$$n_1 = \left\lfloor n \cdot \frac{2^{\mu_{SRS}}}{2^{\mu_{PDCCH}}} \right\rfloor + k \quad ;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $n_1$ represents the first slot, and k represents the second slot offset.

25. The method of any one of solutions 1 to 18, wherein the first device is configured with a slot offset for a carrier aggregation (CA), and the first target slot meets a following condition:

$$n' = \left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor + z$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N_{\text{slot, offset, PDCCH}}^{\text{CA}}$ and $\mu_{\text{offset,PDCCH}}$ are $N_{\text{slot, offset}}^{\text{CA}}$ and $\mu_{\text{offset}}$ which depend on an upper layer configuration and are configured to receive a slot offset for the carrier aggregation (CA) of the physical downlink control channel (PDCCH), respectively, $N_{slot,offset,SRS}^{CA}$ and $\mu_{offset,SRS}$ are $N_{slot,offset}^{CA}$ and $\mu_{offset}$ which depend on the upper layer configuration and are configured to transmit a slot offset for the carrier aggregation (CA) of the SRS, respectively, n' represents the first target slot, k represents the second slot offset, and z represents a number of slots to be offset determined based on the first slot offset.

26. The method of solution 25, wherein the z representing the number of slots to be offset determined based on the first slot offset comprises: z representing a T-th available slot counting from $n_1$ or after $n_1$;

wherein T represents the first slot offset and $n_1$ meets a following condition:

$$n_1 = \left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor ;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N^{CA}_{slot, offset, PDCCH}$ and $\mu_{offset,PDCCH}$ are $N^{CA}_{slot, offset}$ and $\mu_{offset}$ which depend on an upper layer configuration and are configured to receive a slot offset for the carrier aggregation (CA) of the physical downlink control channel (PDCCH), respectively, $N^{CA}_{slot,offset,SRS}$ and $\mu_{offset, SRS}$ are $N^{CA}_{slot,offset}$ and $\mu_{offset}$ which depend on the upper layer configuration and are configured to transmit a slot offset for the carrier aggregation (CA) of the SRS, respectively, $n_1$ represents the first slot, and k represents the second slot offset.

27. The method of any one of solutions 1 to 26, further comprising:
receiving configuration information sent by the second device, wherein the configuration information is configured to configure one or more SRS resource sets, each of the one or more SRS resource sets is configured with at least one SRS resource, and the one or more SRS resource sets comprises the at least one SRS resource set.

28. The method of solution 27, wherein the at least one SRS resource set comprises a plurality of SRS resource sets whose usage fields are configured as antenna switching, and different SRS resource sets of the plurality of SRS resource sets correspond to different transmission slots.

29. The method of solution 27, wherein each of the plurality of SRS resource sets is configured with a corresponding trigger state.

30. The method of solution 27, wherein the plurality of SRS resource sets are configured with a same number of slot offsets.

31. The method of any one of solutions 1 to 30, further comprising:

reporting capability information of the first device;
wherein the capability information is configured to indicate that the first device supports configuring a first configuration field for an SRS resource set, and the first configuration field is configured to configure a slot offset for the SRS resource set; and/or the capability information is configured to indicate that the first device supports comprising the second field in control information; and/or the capability information is configured to indicate that the first device supports dynamic slot offset.

32. The method of solution 31, wherein the capability information is reported via radio resource control (RRC) signaling, or media access control control element (MAC CE).

33. The method of solution 31, wherein the reporting the capability information of the first device comprises one of:

reporting the capability information for each band combination;
reporting the capability information for each band range;
reporting the capability information for each band;
reporting the capability information for each carrier; or
reporting the capability information for each terminal device.

34. The method of solution 33, wherein the reporting the capability information for each band combination comprises:

reporting the capability information for each band of the each band combination; or

reporting the capability information for each carrier on each band of the each band combination.

35. The method of any one of solutions 1 to 34, wherein the first control information is at least one of downlink control information format 0_1 (DCI format 0_1), downlink control information format 0_2 (DCI format 0_2), downlink control information format 1_1 (DCI format 1_1), downlink control information format 1_2 (DCI format 1_2), or downlink control information format 2_3 (DCI format 2_3).

36. The method of any one of solutions 1 to 35, further comprising:

performing, for a third SRS resource set of the at least one SRS resource set, aperiodic SRS transmission on a second target slot based on the third SRS resource set;
wherein the third SRS resource set is an SRS resource set, which is not configured with the at least one slot offset, of the at least one SRS resource set; and the second target slot is determined based on the second slot offset.

37. The method of solution 36, wherein the first device is not configured with a slot offset for a carrier aggregation (CA), and the second target slot meets a following condition:

$$n' = \left\lfloor n \cdot \frac{2^{\mu_{SRS}}}{2^{\mu_{PDCCH}}} \right\rfloor + k \;;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, n' represents the second target slot, and k represents the second slot offset.

38. The method of solution 36, wherein the first device is configured with a slot offset for a carrier aggregation (CA), and the second target slot meets a following condition:

$$n' = \left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor \;;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N_{slot, offset, PDCCH}^{CA}$ and $\mu_{offset,PDCCH}$ are $N_{slot, offset}^{CA}$ and $\mu_{offset}$ which depend on an upper layer configuration and are configured to receive a slot offset for the carrier aggregation (CA) of the physical downlink control channel (PDCCH), respectively, $N_{slot,offset,SRS}^{CA}$ and $\mu_{offset,SRS}$ are $N_{slot,offset}^{CA}$ and $\mu_{offset}$ which depend on the upper layer configuration and are configured to transmit a slot offset for the carrier aggregation (CA) of the SRS, respectively, and n' represents the second target slot.

39. A wireless communication method, applied to a second device, comprising:

sending first control information to a first device;
wherein the first control information comprises a first field and a second field, and the first field is configured to indicate to trigger the first device to perform aperiodic sounding reference signal (SRS) transmission based on at least one SRS resource set; and
performing, for a first SRS resource set of the at least one SRS resource set, aperiodic SRS transmission on a first target slot based on the first SRS resource set;
wherein the first SRS resource set is an SRS resource set, which is configured with at least one slot offset, of the at least one SRS resource set; the first control information further comprises the second field; the second field is configured to indicate a first slot offset, which corresponds to the first SRS resource set, of the at least one slot offset; and the first target slot is determined based on at least one of the first slot offset or a second slot offset.

40. The method of solution 39, further comprising:
determining a number of bits occupied by the second field.

41. The method of solution 40, wherein the determining the number of bits occupied by the second field comprises:

sending first indicative information to the first device;
wherein the first indicative information is configured for the first device to determine the number of bits occupied by the second field.

42. The method of solution 41, wherein the first indicative information is configured to indicate that the first control information comprises the second field.

43. The method of solution 41, wherein the first indicative information is configured to indicate the number of bits occupied by the second field.

44. The method of solution 40, wherein the determining the number of bits occupied by the second field comprises:

determining the number of bits occupied by the second field based on a first configuration field of a second SRS resource set of all SRS resource sets configured with the at least one slot offset;
wherein the first configuration field is configured to provide the at least one slot offset for the SRS resource set.

45. The method of solution 44, wherein the first configuration field is configured by at least one of a list structure, a sequence structure, or a bitmap.

46. The method of solution 44 or 45, wherein the second SRS resource set is an SRS resource set, which has a highest number of slot offsets configured by the first configuration field, of all the SRS resource sets configured with the at least one slot offset.

47. The method of solution 46, wherein the number of bits occupied by the second field and the number of slot offsets configured for the second resource set meet one of:

$$2^a \geq K, \text{ or } 2^a \geq K+1;$$

wherein a represents the number of bits occupied by the second field, and K represents the number of slot offsets configured for the second SRS resource set.

48. The method of any one of solutions 39 to 47, further comprising:
in a case where the number of the at least one slot offset is greater than or equal to a value of the second field, determining an X-th slot offset of the at least one slot offset as the first slot offset, wherein X represents the value of the second field, or X represents the value of the second field plus 1.

49. The method of solution 48, wherein the determining the X-th slot offset of the at least one slot offset as the first slot offset comprises:

determining the X-th slot offset of the at least one slot offset as the first slot offset, in an order from largest to smallest or from smallest to largest; or
determining the X-th slot offset of the at least one slot offset as the first slot offset, in a configuration order of the at least one slot offset.

50. The method of any one of solutions 39 to 47, further comprising:

in a case where the number of the at least one slot offset is greater than or equal to a value of the second field, determining a slot offset corresponding to the value of the second field as the first slot offset based on a first correspondence;
wherein the first correspondence comprises at least one value and a slot offset corresponding to each of the at least one value, and the at least one value comprises the value of the second field.

51. The method of solution 50, wherein the first correspondence is agreed in a protocol or configured by the second device.

52. The method of solution 50, wherein the first correspondence is configured by radio resource control (RRC) signaling, or media access control control element (MAC CE).

53. The method of any one of solutions 39 to 47, further comprising:

in a case where the number of the at least one slot offset is less than or equal to a value of the second field, performing one of:

determining a (mod (Y, N))-th slot offset or a (mod (Y, N) + 1)-th slot offset of the at least one slot offset as the first slot offset, wherein Y represents a value of the second field, or Y represents the value of the second field plus 1, N represents the number of the at least one slot offset, and mod represents a modulo operation;
determining an N-th slot offset of the at least one slot offset as the first slot offset;
determining a first slot offset of the at least one slot offset as the first slot offset;
determining the first slot offset as 0;
sending the first SRS resource set without considering the second field; or
sending the first SRS resource set without considering the first slot offset.

54. The method of solution 53, wherein the determining the (mod (Y, N))-th slot offset or the (mod (Y, N) + 1)-th slot offset of the at least one slot offset as the first slot offset comprises:

determining the (mod (Y, N))-th slot offset or the (mod (Y, N) + 1)-th slot offset of the at least one slot offset as the first slot offset, in an order from largest to smallest or from smallest to largest; or
determining the (mod (Y, N))-th slot offset or the (mod (Y, N) + 1)-th slot offset of the at least one slot offset as the first slot offset, in a configuration order of the at least one slot offset.

55. The method of any one of solutions 39 to 54, wherein each first SRS resource set of the at least one SRS resource set is configured with a same number of slot offsets; or each of the at least one SRS resource set is configured with a same number of slot offsets.

56. The method of any one of solutions 39 to 55, wherein the first SRS resource set is configured with $2^a$ slot offsets, and a represents a number of bits occupied by the second field.

57. The method of any one of solutions 39 to 56, further comprising:

determining the first target slot based on the first slot and the first slot offset;
wherein the first slot is determined by a slot where the first control information is located and the second slot offset.

58. The method of solution 57, wherein the determining the first target slot based on the first slot and the first slot offset comprises:
determining a T-th available slot counting from the first slot or after the first slot as the first target slot, wherein T represents the first slot offset.

59. The method of solution 57, wherein the first device is not configured with a slot offset for a carrier aggregation (CA), and the first slot meets a following condition:

$$n_1 = \left\lfloor n \cdot \frac{2^{\mu_{SRS}}}{2^{\mu_{PDCCH}}} \right\rfloor + k \ ;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $n_1$ represents the first slot, and k represents the second slot offset.

60. The method of solution 57, wherein the first device is configured with a slot offset for a carrier aggregation (CA), and the first slot meets a following condition:

$$n_1 = \left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor \ ;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N_{slot, offset, PDCCH}^{CA}$ and $\mu_{offset,PDCCH}$ are $N_{slot, offset}^{CA}$ and $\mu_{offset}$ which depend on an upper layer configuration and are configured to receive a slot offset for the carrier aggregation (CA) of the physical downlink control channel (PDCCH), respectively, $N_{slot,offset,SRS}^{CA}$ and $\mu_{offset,SRS}$ are $N_{slot,offset}^{CA}$ and $\mu_{offset}$ which depend on the upper layer configuration and are configured to transmit a slot offset for the carrier aggregation (CA) of the SRS, respectively, $n_1$ represents the first slot, and k represents the second slot offset.

61. The method of any one of solutions 39 to 56, wherein the first device is not configured with a slot offset for a carrier aggregation (CA), and the first target slot meets a following condition:

$$n' = \left\lfloor n \cdot \frac{2^{\mu_{SRS}}}{2^{\mu_{PDCCH}}} \right\rfloor + k + z \quad ;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, n' represents the first target slot, k represents the second slot offset, and z represents a number of slots to be offset determined based on the first slot offset.

62. The method of solution 61, wherein the z representing the number of slots to be offset determined based on the first slot offset comprises: z representing a T-th available slot counting from $n_1$ or after $n_1$;

wherein T represents the first slot offset and $n_1$ meets a following condition:

$$n_1 = \left\lfloor n \cdot \frac{2^{\mu_{SRS}}}{2^{\mu_{PDCCH}}} \right\rfloor + k \quad ;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $n_1$ represents the first slot, and k represents the second slot offset.

63. The method of any one of solutions 39 to 56, wherein the first device is configured with a slot offset for a carrier aggregation (CA), and the first target slot meets a following condition:

$$n' = \left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor + z \quad ;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N_{slot, offset, PDCCH}^{CA}$ offset, PDCCH and $\mu_{offset,PDCCH}$ are $N_{slot, offset}^{CA}$ and $\mu_{offset}$ which depend on an upper layer configuration and are configured to receive a slot offset for the carrier aggregation (CA) of the physical downlink control channel (PDCCH), respectively, $N_{slot,offset,SRS}^{CA}$ and $\mu_{offset,SRS}$ are $N_{slot,offset}^{CA}$ and $\mu_{offset}$ which depend on the upper layer configuration and are configured to transmit a slot offset for the carrier aggregation (CA) of the SRS, respectively, n' represents the first target slot, k represents the second slot offset, and z represents a number of slots to be offset determined based on the first slot offset.

64. The method of solution 63, wherein the z representing the number of slots to be offset determined based on the first slot offset comprises: z representing a T-th available slot counting from $n_1$ or after $n_1$;

wherein T represents the first slot offset and $n_1$ meets a following condition:

$$n_1 = \left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor ;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N_{slot,\ offset,\ PDCCH}^{CA}$ offset, PDCCH and $\mu_{offset,PDCCH}$ are $N_{slot,\ offset}^{CA}$ and $\mu_{offset}$ which depend on an upper layer configuration and are configured to receive a slot offset for the carrier aggregation (CA) of the physical downlink control channel (PDCCH), respectively, $N_{slot,offset,SRS}^{CA}$ and $\mu_{offset,SRS}$ are $N_{slot,offset}^{CA}$ and $\mu_{offset}$ which depend on the upper layer configuration and are configured to transmit a slot offset for the carrier aggregation (CA) of the SRS, respectively, $n_1$ represents the first slot, and k represents the second slot offset.

65. The method of any one of solutions 39 to 64, further comprising:
sending configuration information to the first device, wherein the configuration information is configured to configure one or more SRS resource sets, each of the one or more SRS resource sets is configured with at least one SRS resource, and the one or more SRS resource sets comprises the at least one SRS resource set.

66. The method of solution 65, wherein the at least one SRS resource set comprises a plurality of SRS resource sets whose usage fields are configured as antenna switching, and different SRS resource sets of the plurality of SRS resource sets correspond to different transmission slots.

67. The method of solution 65, wherein each of the plurality of SRS resource sets is configured with a corresponding trigger state.

68. The method of solution 65, wherein the plurality of SRS resource sets are configured with a same number of slot offsets.

69. The method of any one of solutions 39 to 68, further comprising:

receiving capacity information reported by the first device;
wherein the capability information is configured to indicate that the first device supports configuring a first configuration field for an SRS resource set, and the first configuration field is configured to configure a slot offset for the SRS resource set; and/or the capability information is configured to indicate that the first device supports comprising the second field in control information; and/or the capability information is configured to indicate that the first device supports dynamic slot offset.

70. The method of solution 69, wherein the capability information is reported via radio resource control (RRC) signaling, or media access control control element (MAC CE).

71. The method of solution 9, wherein the receiving the capacity information reported by the first device comprises one of:

receiving the capability information reported by the first device for each band combination;
receiving the capability information reported by the first device for each band range;
receiving the capability information reported by the first device for each band;
receiving the capability information reported by the first device for each carrier; or
receiving the capability information reported by the first device for each terminal device.

72. The method of solution 71, wherein the receiving the capability information reported by the first device for each band combination comprises:

> receiving the capability information reported by the first device for each band of the each band combination; or
> receiving the capability information reported by the first device for each carrier on each band of the each band combination.

73. The method of any one of solutions 39 to 72, wherein the first control information is at least one of downlink control information format 0_1 (DCI format 0_1), downlink control information format 0_2 (DCI format 0_2), downlink control information format 1_1 (DCI format 1_1), downlink control information format 1_2 (DCI format 1_2), or downlink control information format 2_3 (DCI format 2_3).

74. The method of any one of solutions 39 to 73, further comprising:

> performing, for a third SRS resource set of the at least one SRS resource set, aperiodic SRS transmission on a second target slot based on the third SRS resource set;
> wherein the third SRS resource set is an SRS resource set, which is not configured with the at least one slot offset, of the at least one SRS resource set; and the second target slot is determined based on the second slot offset.

75. The method of solution 74, wherein the first device is not configured with a slot offset for a carrier aggregation (CA), and the second target slot meets a following condition:

$$n' = \left\lfloor n \cdot \frac{2^{\mu_{SRS}}}{2^{\mu_{PDCCH}}} \right\rfloor + k \quad ;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, n' represents the second target slot, and k represents the second slot offset.

76. The method of solution 74, wherein the first device is configured with a slot offset for a carrier aggregation (CA), and the second target slot meets a following condition:

$$n' = \left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor ;$$

wherein n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N_{slot,\,offset,\,PDCCH}^{CA}$ and $\mu_{offset,PDCCH}$ are $N_{slot,\,offset}^{CA}$ offset and $\mu_{offset}$ which depend on an upper layer configuration and are configured to receive a slot offset for the carrier aggregation (CA) of the physical downlink control channel (PDCCH), respectively, $N_{slot,offset,SRS}^{CA}$ and $\mu_{offset,SRS}$ are $N_{slot,offset}^{CA}$ and $\mu_{offset}$ which depend on the upper layer configuration and are configured to transmit a slot offset for the carrier aggregation (CA) of the SRS, respectively, and n' represents the second target slot.

77. A first device, comprising:

> a receiving unit, configured to receive first control information sent by a second device;
> wherein the first control information comprises a first field and a second field, and the first field is configured to indicate to trigger the first device to perform aperiodic sounding reference signal (SRS) transmission based on at least one SRS resource set; and
> a sending unit, configured to perform, for a first SRS resource set of the at least one SRS resource set, aperiodic SRS transmission on a first target slot based on the first SRS resource set;

wherein the first SRS resource set is an SRS resource set, which is configured with at least one slot offset, of the at least one SRS resource set; the first control information further comprises the second field; the second field is configured to indicate a first slot offset, which corresponds to the first SRS resource set, of the at least one slot offset; and the first target slot is determined based on at least one of the first slot offset or a second slot offset.

78. A second device, comprising:

a sending unit, configured to send first control information to a first device;

wherein the first control information comprises a first field and a second field, and the first field is configured to indicate to trigger the first device to perform aperiodic sounding reference signal (SRS) transmission based on at least one SRS resource set; and

a receiving unit, configured to perform, for a first SRS resource set of the at least one SRS resource set, aperiodic SRS transmission on a first target slot based on the first SRS resource set;

wherein the first SRS resource set is an SRS resource set, which is configured with at least one slot offset, of the at least one SRS resource set; the first control information further comprises the second field; the second field is configured to indicate a first slot offset, which corresponds to the first SRS resource set, of the at least one slot offset; and the first target slot is determined based on at least one of the first slot offset or a second slot offset.

79. A first device, comprising:

a processor and a memory, wherein the memory is configured to store a computer program, and the processor is configured to call and run the computer program stored in the memory to execute the method of any one of solutions 1 to 38.

80. A second device, comprising:

a processor and a memory, wherein the memory is configured to store a computer program, and the processor is configured to call and run the computer program stored in the memory to execute the method of any one of solutions 39 to 76.

81. A chip, comprising:

a processor, configured to call and run a computer program in a memory to enable a device on which the chip is installed to execute the method of any one of solutions 1 to 38 or the method of any one of solutions 39 to 76.

82. A computer-readable storage medium, configured to store a computer program, the computer program enabling a computer to execute the method of any one of solutions 1 to 38 or the method of any one of solutions 39 to 76.

83. A computer program product, comprising computer program instructions, the computer program instructions enabling a computer to execute the method of any one of solutions 1 to 38 or the method of any one of solutions 39 to 76.

84. A computer program, enabling a computer to execute the method of any one of solutions 1 to 38 or the method of any one of solutions 39 to 76.

In a first aspect, the disclosure provides a wireless communication method. The method includes the following operations.

First control information sent by a second device is received.

Here, the first control information includes a first field and a second field, and the first field is configured to indicate to trigger a first device to perform aperiodic sounding reference signal (SRS) transmission based on at least one SRS resource set.

For a first SRS resource set of the at least one SRS resource set, aperiodic SRS transmission is performed on a first target slot based on the first SRS resource set.

Here, the first SRS resource set is an SRS resource set, which is configured with at least one slot offset, of the at least one SRS resource set; the first control information further includes the second field; the second field is configured to indicate a first slot offset, which corresponds to the first SRS resource set, of the at least one slot offset; and the first target slot is determined based on at least one of the first slot offset or a second slot offset.

In a second aspect, the disclosure provides a wireless communication method. The method includes the following operations.

First control information is sent to a first device.

Here, the first control information includes a first field and a second field, and the first field is configured to indicate to trigger the first device to perform aperiodic sounding reference signal (SRS) transmission based on at least one SRS resource set.

For a first SRS resource set of the at least one SRS resource set, aperiodic SRS transmission is performed on a first target slot based on the first SRS resource set.

Here, the first SRS resource set is an SRS resource set, which is configured with at least one slot offset, of the at least one SRS resource set; the first control information further includes the second field; the second field is configured to indicate a first slot offset, which corresponds to the first SRS resource set, of the at least one slot offset; and the first target slot is determined based on at least one of the first slot offset or a second slot offset.

In a third aspect, the disclosure provides a first device for executing the method of the above first aspect or each of its implementation modes. Specifically, the first device includes a function module configured to execute the method of the above first aspect or each of its implementation modes.

In a fourth aspect, the disclosure provides a second device for executing the method of the above second aspect or each of its implementation modes. Specifically, the first device includes a function module configured to execute the method of the above second aspect or each of its implementation modes.

In a fifth aspect, the disclosure provides a first device including a processor and a memory. The memory is configured to store a computer program, and the processor is configured to call and run the computer program stored in the memory to execute the method of the above first aspect or each of its implementation modes.

In a sixth aspect, the disclosure provides a second device including a processor and a memory. The memory is configured to store a computer program, and the processor is configured to call and run the computer program stored in the memory to execute the method of the above second aspect or each of its implementation modes.

In a seventh aspect, the disclosure provides a chip for implementing the method of either of the above first and second aspects, or each of its implementation modes. Specifically, the chip includes a processor, configured to call and run a computer program in a memory to enable a device installed with the chip to execute the method of either of the above first and second aspects, or each of its implementation modes.

In an eighth aspect, the disclosure provides a computer-readable storage medium configured to store a computer program. The computer program enables a computer to execute the method of either of the above first and second aspects, or each of its implementation modes.

In a ninth aspect, the disclosure provides a computer program product including a computer program instruction. The computer program instruction enables a computer to execute the method of either of the above first and second aspects, or each of its implementation modes.

In a tenth aspect, the disclosure provides a computer program. The computer program, when run on a computer, enables the computer to execute the method of either of the above first and second aspects, or each of its implementation modes.

Based on the above technical solution, the value of the second field is designed to be used to indicate a first slot offset of the at least one slot offset configured for the triggered first SRS resource set, which avoids the slot offset between the trigger signaling and the SRS transmission from being fixed. That is, the relative position of the slot for receiving the trigger signaling and the slot for sending the SRS are selectable or determinable, and accordingly, the restrictiveness of the aperiodic SRS triggering and the corresponding SRS transmission may be reduced, and the flexibility of the system may be improved.

BRIEF DESCRIPTION OF THE DRAWINGS

FIG. 1 is an example of an application scenario of the disclosure.

FIG. 2 is a schematic flowchart of a wireless communication method configured by an embodiment of the disclosure.

FIG. 3 is a schematic block diagram of a first device configured by an embodiment of the disclosure.

FIG. 4 is a schematic block diagram of a second device configured by an embodiment of the disclosure.

FIG. 5 is a schematic block diagram of a communication device configured by an embodiment of the disclosure.

FIG. 6 is a schematic block diagram of a chip configured by an embodiment of the disclosure.

DETAILED DESCRIPTION

The technical solutions in the embodiments of the disclosure will be described below in conjunction with the drawings in the embodiments of the disclosure. It is apparent that the described embodiments are a part of the embodiments of the disclosure and not all of the embodiments. Based on the embodiments of the disclosure, all other embodiments obtained by those of ordinary skill in the art without making creative labor fall within the scope of protection of the disclosure.

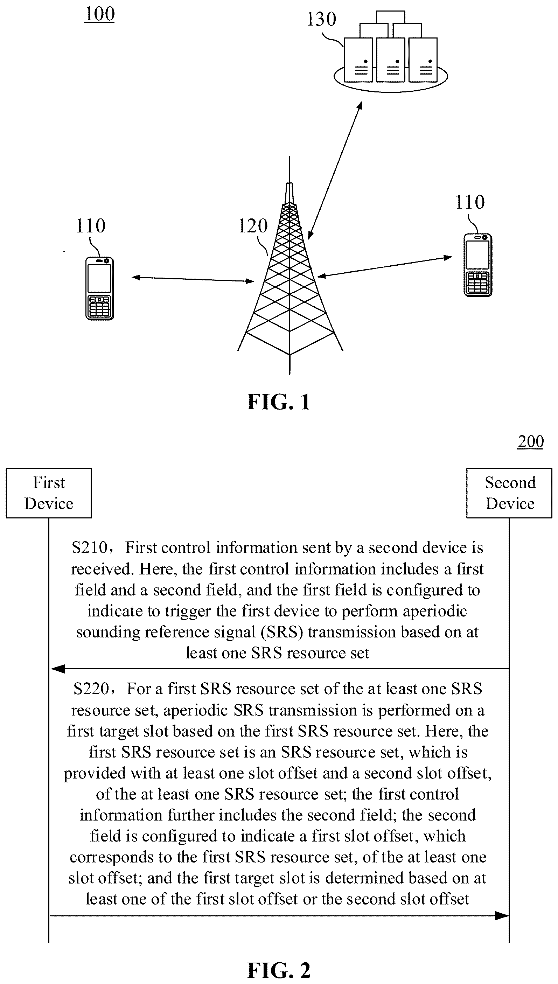

FIG. 1 is a schematic diagram of an application scenario of an embodiment of the disclosure.

As shown in FIG. 1, a communication system 100 may include a terminal device 110 and a network device 120. The network device 120 may communicate with the terminal device 110 by an air interface. Multi-service transmission is supported between the terminal device 110 and the network device 120.

It is to be understood that embodiments of the disclosure are only illustrated exemplarily with the communication system 100, but embodiments of the disclosure are not limited thereto. That is, the technical solutions of the embodiments of the disclosure may be applied to various communication systems, for example, a Long Term Evolution (LTE) system, an LTE Time Division Duplex (TDD), a Universal Mobile Telecommunication System (UMTS), a 5G communication system (also referred to as a New Radio (NR) communication system), a future communication system, or the like.

In the communication system 100 shown in FIG. 1, the network device 120 may be an access network device that communicates with the terminal device 110. The access network device may provide communication coverage for a specific geographic area and may communicate with a terminal device 110 (for example, a UE) located within the coverage area.

The network device 120 may be an Evolutional Node B (eNB or eNodeB) in a Long Term Evolution (LTE) system, a Next Generation Radio Access Network (NG RAN) device, a base station (gNB) in an NR system, or a radio controller in a Cloud Radio Access Network (CRAN). Alternatively, the network device 120 may be a relay station, an access point, an on-board device, a wearable device, a hub, a switch, a network bridge, a router, a network device in the future evolved Public Land Mobile Network (PLMN), or the like.

The terminal device 110 may be any terminal device, which includes, but is not limited to, a terminal device that has a wired or wireless connection to the network device 120 or other terminal devices.

For example, the terminal device 110 may refer to an access terminal, a User Equipment (UE), a user unit, a user station, a mobile station, a mobile platform, a remote station, a remote terminal, a mobile device, a user terminal, a terminal, a wireless communication device, a user agent, or a user apparatus. The access terminal may be a cellular telephone, a cordless telephone, a Session Initiation Protocol (SIP) telephone, a Wireless Local Loop (WLL) station, a Personal Digital Assistant (PDA), a handheld device with a wireless communication function, a computing device or other processing devices connected to a wireless modem, an on-board device, a wearable device, a terminal device in a 5G network, a terminal device in a future evolution network, or the like.

The terminal device 110 may be used for Device to Device (D2D) communication.

The wireless communication system 100 may also include a core network device 130 that communicates with a base station. The core network device 130 may be a 5G Core (5GC) device, such as an Access and Mobility Management Function (AMF), an Authentication Server Function (AUSF), a User Plane Function (UPF), or a Session Management Function (SMF). Optionally, the core network device 130 may also be an Evolved Packet Core (EPC) device of the LTE network, for example, a Session Management Function + Core Packet Gateway (SMF + PGW-C) device. It is to be understood that the SMF+PGW-C is able to realize the functions that can be realized by the SMF and the PGW-C at the same time. In the process of network evolution, the above core network device may also be called by other names, or new network entities may be formed by dividing the functions of the core network, which is not limited by embodiments of the disclosure.

Communication may also be realized between various functional units in the communication system 100 by establishing a connection through a next generation (NG) interface.

For example, the terminal device establishes an air interface connection with the access network device through an NR interface for transmitting user plane data and control plane signaling. The terminal device may establish a control plane signaling connection with the AMF through NG interface 1 (N1 for short). The access network device, such as a next-generation wireless access base station (gNB), may establish a user plane data connection with the UPF through NG interface 3 (N3 for short). The access network device may establish a control plane signaling connection with the AMF through NG interface 2 (N2 for short). The UPF may establish a control plane signaling connection with the SMF through NG interface 4 (N4 for short). The UPF may exchange user plane data with the data network through NG interface 6 (N6 for short). The AMF may establish a control plane signaling connection with the SMF through NG interface 11 (N11 for short). The SMF may establish a control plane signaling connection with the PCF through NG interface 7 (N7 for short).

FIG. 1 exemplarily illustrates a base station, a core network device, and two terminal devices. Optionally, the wireless communication system 100 may include multiple base station devices, and other numbers of terminal devices may be included within the coverage area of each base station, which is not limited by embodiments of the disclosure.

It is to be understood that devices in the network/system in the embodiments of the disclosure, which have a communication function, may all be referred to as communication devices. Taking the communication system 100 shown in FIG. 1 as an example, the communication device may include a network device 120 and a terminal device 110 which have a communication function, and the network device 120 and the terminal device 110 may be the devices described above, which will not be repeated herein. The communication device may further include other devices in the communication system 100, such as a network controller, a mobile management entity, and other network entities, which is not limited by embodiments of the disclosure.

It is to be understood that the terms "system" and "network" may often be used interchangeably herein. The term "and/or" herein is only a description of an association relationship of associated objects, representing that there may be three kinds of relationships. For example, A and/or B may represent three conditions: i.e., independent existence of A, existence of both A and B and independent existence of B. In addition, the character "/" herein usually represents that the previous and next associated objects are in an "or" relationship.

To facilitate the understanding of the embodiments of the disclosure, the SRS is introduced below.

The Sounding Reference Signal (SRS) is an important reference signal in a 5G/NR system and is widely used in various functions in the NR system. For example, the SRS may be used in the following scenarios:

1. for acquiring downlink channel state information (UE sounding procedure for DL CSI acquisition);
2. for uplink beam management, and for frequency domain scheduling and precoding determination of uplink transmission;
3. for localization functions;
4. for cooperating with codebook-based uplink transmission;
for example, for the determination of frequency domain scheduling and Rank/precoding matrix indicator (PMI)/Modulation Coding Scheme (MCS).
5. for cooperating with Non-Codebook based uplink transmission;
for example, for the determination of frequency domain scheduling and SRS Resource Indicator (SRI)/MCS.

A network device may provide one or more SRS resource sets for an terminal device, and each SRS resource set may be configured with one or more SRS resources.

SRS transmissions may be categorized as Periodic, Semi-persistent, and Aperiodic.

A periodic SRS refers to a periodically transmitted SRS with the period and slot offset configured by RRC signaling. Once the terminal device receives the corresponding configuration parameters, the terminal device transmits the SRS according to a certain period until the RRC configuration expires. The spatial relation information of the periodic SRS is also configured by the RRC signaling. The spatial relation information may indicate a Channel State Information Reference Signal (CSI-RS), a Synchronization Signal/PBCH Block (SSB) or a reference SRS. For example, the transmit beam of the periodic SRS may be indicated implicitly. For example, the terminal device determines the transmit beam of the periodic SRS according to the indicated CSI-RS/SSB. Further, for example, the terminal device may determine the transmit beam used to transmit the SRS on the SRS resource by the spatial relation information of the SRS resource.

A semi-persistent SRS is also a periodically transmitted SRS with the period and slot offset configured by RRC signaling, but its activation and de-activation signaling is carried by MAC CE. The terminal device starts transmitting the SRS after receiving the activation signaling until it receives the de-activation signaling. The spatial relation information (transmit beam) of the semi-continuous SRS is carried together by the MAC CE that activates the SRS.

After receiving the period and slot offset configured by RRC, the terminal device determines a slot that may be used for transmitting the SRS according to the following equation.

$$\left( N_{\text{slot}}^{\text{frame},\mu} n_f + n_{s,f}^{\mu} - T_{\text{offset}} \right) \bmod T_{\text{SRS}} = 0$$

Here, $T_{\text{SRS}}$ and $T_{\text{OFFSET}}$ are the configured period and offset, and $n_f$ and $n_{s,f}^{\mu}$ are the radio frame and slot number, respectively.

Aperiodic SRS transmission means that the network device may trigger the SRS transmission of the terminal device by DCI. The trigger signaling for triggering the aperiodic SRS transmission may be carried by either the DCI for scheduling PUSCH/PDSCH in the UE exclusive search space or in the common search space, or DCI format 2_3 in the common search space.

Table 1 SRS trigger signaling

| Value of the SRS request field | DCI format 0_1, 1_0 and 2_3 trigger an aperiodic SRS resource set and configure the higher level parameter SRS-TPC-PDCCH set as being set to 'Type B' |
|---|---|
| 00 | No aperiodic SRS resource set is triggered |
| 01 | The SRS resource set with (aperiodicSRS-ResourceTrigger) set to 1 is triggered using the higher level parameter SRS resource |

(continued)

| Value of the SRS request field | DCI format 0_1, 1_0 and 2_3 trigger an aperiodic SRS resource set and configure the higher level parameter SRS-TPC-PDCCH set as being set to 'Type B' |
|---|---|
| 10 | The SRS resource set with (aperiodicSRS-ResourceTrigger) set to 2 is triggered using the higher level parameter SRS resource |
| 11 | The SRS resource set with (aperiodicSRS-ResourceTrigger) set to 3 is triggered using the higher level parameter SRS resource |

The value of the SRS request field is shown in Table 1. For example, if the value of the SRS request field is 11, the trigger signaling of the SRS indicates to trigger the SRS resource set with (aperiodicSRS-ResourceTrigger) set to 3 using the higher level parameter SRS resource.

After receiving the aperiodic SRS trigger signaling (for example, the DCI), the terminal device performs SRS transmission on the SRS resource set indicated by the trigger signaling. Here, the slot offset between the trigger signaling and the SRS transmission may be configured by high-level signaling (RRC). The network device indicates configuration parameters of each SRS resource set to the terminal device in advance, including time-frequency resources, sequence parameters, power control parameters, and the like, by high-level signaling. In addition, for each SRS resource in the triggered SRS resource set, the terminal device may further determine the transmit beam used for transmitting the SRS on the resource by the spatial relation information of the resource, and the spatial relation information may be configured to each SRS resource by RRC.

As previously mentioned, for an aperiodic Sounding Reference Signal (SRS), the slot offset may be configured by high-level signaling. That is, the slot offset between each trigger signaling and the SRS transmission is unchanging until RRC signaling reconfigures other values, which results in the relative position of the slot for receiving the trigger signaling and the slot for sending the SRS being fixed, increases the restrictiveness of the aperiodic SRS triggering and the corresponding SRS transmission, and reduces the flexibility of the system.

For example, it is assumed that the slot offset is k. If the SRS is to be triggered to be transmitted on slot n+k, the corresponding trigger signaling can only be sent on slot n, which restricts the timing of sending the trigger signaling and adds an additional and unnecessary restriction to the scheduling of the network devices. Further, when a slot, or certain symbols on a slot, are dynamically changed from being uplinkable to downlinkable, a certain aperiodic SRS transmission may be made impossible. For example, if the slot n+k is changed to be used for downlink transmission, the SRS trigger signaling sent on the slot n is then invalid, or no trigger signaling can be sent on slot n.

Based on this, the disclosure introduces dynamic indication of the slot offset by DCI. That is, each SRS resource set may be configured with at least one (for example, four) slot offset, and the network device may indicate which of these slot offsets is ultimately adopted by an indication field in the DCI. Optionally, the indication field may be designed to be at most 2 bits, in other words, each time a corresponding aperiodic SRS transmission is triggered, a corresponding indication field in the DCI may indicate one of the slot offsets.

FIG. 2 illustrates a schematic flowchart of a wireless communication method 200 according to an embodiment of the disclosure. The method 200 may be performed interactively by a first device and a second device. The first device shown in FIG. 2 may be the terminal device shown in FIG. 1, and the second device shown in FIG. 2 may be the access network device shown in FIG. 1. Of course, the first device and the second device may both be terminal devices, which is not limited by the disclosure.

As shown in FIG. 2, the method 200 may include the following operations.

In operation S210, first control information sent by a second device is received.

Here, the first control information includes a first field and a second field, and the first field is configured to indicate to trigger the first device to perform aperiodic sounding reference signal (SRS) transmission based on at least one SRS resource set.

In operation S220, for a first SRS resource set of the at least one SRS resource set, aperiodic SRS transmission is performed on a first target slot based on the first SRS resource set.

Here, the first SRS resource set is an SRS resource set, which is configured with at least one slot offset, of the at least one SRS resource set; the first control information further includes the second field; the second field is configured to indicate a first slot offset, which corresponds to the first SRS resource set, of the at least one slot offset; and the first target slot is determined based on at least one of the first slot offset or a second slot offset.

In other words, the first device receives the first control information sent by the second device (the second device may be a network device or a second terminal device), and the first device determines the first slot offset corresponding to the first SRS resource set based on the value of the second field. Next, the first device determines the first target slot corresponding to the first SRS resource set based on the first slot offset corresponding to the first SRS resource set and/or the second slot offset corresponding to the first SRS resource set. Finally, the first device performs aperiodic SRS transmission on the first target slot corresponding to the first SRS resource set.

For example, for a first SRS resource set configured with at least one slot offset, if the first slot offset corresponding to the first SRS resource set is not 0, the first target slot corresponding to the first SRS resource set may be determined based on the first slot offset corresponding to the first SRS resource set and the second slot offset corresponding to the first SRS resource set.

In the embodiment, the value of the second field is designed to be used to indicate a first slot offset of the at least one slot offset configured for the triggered first SRS resource set, which avoids the slot offset between the trigger signaling and the SRS transmission from being fixed. That is, the relative position of the slot for receiving the trigger signaling and the slot for sending the SRS are selectable or determinable, and accordingly, the restrictiveness of the SRS transmission may be reduced, and the flexibility of the system may be improved.

It is to be noted that the at least one slot offset herein is different from the second slot offset. That is, the second slot offset is in addition to the at least one slot offset. Alternatively, for a first SRS resource set, both the at least one slot offset and the second slot offset may be configured. Of course, for a certain SRS resource set, it is also possible to provide only one second slot offset, or to provide neither the at least one slot offset nor the second slot offset, which is not limited by the disclosure. Optionally, the second slot offset may be configured by an RRC parameter of the SRS resource set, for example, the RRC parameter may be a slotOffset parameter.

It is worth noting that the second slot offset of an SRS resource set always exists. For example, if an offset value is configured for the SRS resource set by RRC, the second slot offset corresponding to the SRS resource set may be the offset value configured by RRC. If no offset value is configured by RRC, the second offset value corresponding to the SRS resource set may be 0.

Furthermore, the first slot offset herein may be 0. That is, for a first SRS resource set, which is configured with at least one slot offset, od the at least one SRS resource set, the first slot offset corresponding to the first SRS resource set may be 0. That is, the first target slot corresponding to the first SRS resource set is determined only based on the second slot offset corresponding to the first SRS resource set, in other words, the first SRS resource set is sent without considering the second field or without considering the first slot offset corresponding to the first SRS resource set.

Of course, the disclosure does not specifically limit the transmission method of the SRS resource set, which is not configured with the at least one slot offset, of the at least one SRS resource.

For example, in an achievable manner, if a certain SRS resource set is not configured with a first configuration field, that is, the certain SRS resource set is not configured with the at least one slot offset, the first device may determine the slot corresponding to the certain SRS resource set according to the second slot offset corresponding to the certain SRS resource set, and then perform SRS transmission on the slot corresponding to the certain SRS resource. That is, for some SRS resource sets, a transmission method that is not based on the first slot offset may be adopted, i.e., the second field is not considered, and for other SRS resource sets, a transmission method based on the first slot offset may be adopted, i.e., SRS transmission is performed based on the value of the second field, which is conducive to providing flexibility of the realization of the network.

Optionally, the aperiodic SRS transmission of the disclosure is transmitted on the first BWP.

In other words, the at least one SRS resource set may be the SRS resource set corresponding to the first BWP.

It is further to be understood that the term "corresponding" referred to in the embodiments of the disclosure may represent a direct or indirect correspondence between the two, or may represent an associated relationship between the two, or a relationship between indicating and being indicated, configuring and being configured, and the like. The term "indicate" involved in the embodiments of the disclosure may be a direct indication, an indirect indication, or may indicate an associated relationship. For example, "A indicates B" may mean that A directly indicates B, e.g., B may be obtained through A; or A indirectly indicates B, e.g., A indicates C, and B may be obtained through C; or there is an associated relationship between A and B. In some embodiments, the method 200 may further includes the following operation.

The number of bits occupied by the second field is determined.

It is to be noted that the term "the number of bits occupied by the value of the second field" herein may be understood as the number of bits occupied by the second field or the size of the second field, or other descriptions with the same or similar meanings, which is not specifically limited by the disclosure.

In some implementations, it is determined that the second field occupies 0 bit in a case where first indicative information is not received by the first device; and/or it is determined that the second field occupies 0 bit in a case where the second device does not send or configure the first indicative information. Here, the first indicative information is configured to indicate that the first control information includes the second field, or the first indicative information is configured to indicate the number of bits occupied by the second field.

In the embodiment, the existence of the second field in the first control information and/or the size of the second field may be determined according to the first indicative information sent by the second device, that is, the network may directly determine whether the second field exists or the size of the second field by signaling, which may simplify the design and reduce the processing complexity of the terminal.

Optionally, the first indicative information is configured to indicate that the first control information includes the second field. Optionally, it is determined that the second field occupies a first number of bits in a case where the first indicative information is received by the first device. For example, the first number may be 2 or other values.

In the embodiment, the first indicative information is designed to indicate that the first control information includes the second field. In this way, there are only two cases, i.e., the case where the second field exists, and the case where the second field does not exist. That is, the number of bits occupied by the second field is a fixed value, which is conducive to reducing the signaling overhead of the first indicative information, and furthermore, reducing the protocol complexity.

Optionally, the first indicative information is configured to indicate the number of bits occupied by the second field. Optionally, it is determined that the second field occupies a second number of bits in a case where the first indicative information is received by the first device and the first indicative information indicates a first value; and/or it is determined that the second field occupies a third number of bits in a case where the first indicative information is received by the first device and the first indicative information indicates a second value. For example, the second number may be 1 or other values, and the third number may be 2 or other values.

In the embodiment, the first indicative information is designed to indicate the number of bits occupied by the second field, which may enable 3 cases of the second field. In some cases, 1 bit of overhead in the DCI may be saved.

Optionally, the first indicative information is transmitted by RRC signaling, or the first indicative information is transmitted by MAC CE signaling.

Of course, in other alternative embodiments, the first indicative information may further be configured to indicate whether the first control information includes the second field, which is not specifically limited by the disclosure.

In the embodiment, in a case where the second field occupies 0 bit, there is no second field in the first control information.

In some implementations, the number of bits occupied by the second field is determined based on a first configuration field of a second SRS resource set of all SRS resource sets configured with the at least one slot offset. Here, the first configuration field is configured to provide the at least one slot offset for the SRS resource set.

In the embodiment, the existence of the second field in the first control information and/or the size of the second field may be determined based on the configuration of the first configuration field of the second SRS resource set of all SRS resource sets configured with the at least one slot offset, which prevents the network device from sending information for determining the size of the second field, and is conducive to saving signaling overhead.

It is to be noted that the first SRS resource set herein may also be defined based on the first configuration field, which is not limited by the disclosure. For example, the first SRS resource set is an SRS resource set, which is configured with the first configuration field, of the at least one SRS resource set, and the first configuration field is configured to provide the at least one slot offset for the SRS resource set.

It is to be noted that the first SRS resource set herein is any one of the SRS resource sets, which are configured with the at least one slot offset, of the at least one SRS resource set triggered by the first field, and the second SRS resource set herein is any one SRS resource set configured with the at least one slot offset. In the disclosure, all the SRS resource sets configured with the at least one slot offset may be all the SRS resource sets at different granularities, which is not specifically limited by the disclosure. For example, the first SRS resource set is an SRS resource set triggered by the first field, but the disclosure does not limit whether the second SRS resource set is an SRS resource set triggered by the first field. That is, the second SRS resource set may be an SRS resource set triggered by the first field, or may not be an SRS resource set triggered by the first field. Alternatively, all the SRS resource sets configured with the at least one slot offset include the SRS resource sets, which are configured with the at least one slot offset, of the at least one SRS resource set triggered by the first field. That is, all the SRS resource sets configured with the at least one slot offset include all the first SRS resource sets. Further, the second SRS resource set may include all the SRS resource sets configured with the at least one slot offset, at a granularity of the first BWP corresponding to the at least one SRS resource set, all activated BWPs, all configured BWPs, the carrier on which the first BWP is located, all activated carriers, or all configured carriers.

Exemplarily, the first configuration field may indicate 0 (that is, no configuration), 1, 2, 3 or 4 values.

Optionally, the first configuration field is configured by at least one of a list structure, a sequence structure, or a bitmap.

In the embodiment, the first configuration field is designed as a list structure, a sequence structure, or a bitmap, which is conducive to simplifying the signaling structure and reducing the processing complexity of the terminal. Further, designing the first configuration field as a bitmap may further provide good scalability for the first configuration field, such as expanding to more than 4 values.

Exemplarily, the syntax elements of the first configuration field are illustrated below with an example of the first configuration field configuring by a sequence structure.

```
SRS-ResourceSet ::=                          SEQUENCE {
        srs-ResourceSetId                            SRS-ResourceSetId,
        srs-ResourceIdList                                                   SEQUENCE
(SIZE(1..maxNrofSRS-ResourcesPerSet)) OF SRS-ResourceId       OPTIONAL, -- Cond Setup
        resourceType                             CHOICE {
            ...
              the1stField       SEQUENCE   (SIZE(1..4))   OF   INTEGER   (1..MaxValue1)
OPTIONAL
            },
            ...
        }
        ...
    }
```

Here, the1stField represents the first configuration field. MaxValue1 represents the largest range of values of each element in the first configuration field, which optionally may have a value of 4, 8, 16, or 32.

Of course, the above positions and the largest range of values of the first configuration field are only examples and should not be understood as limitations of the disclosure.

For example, in other alternative embodiments, it may be included in or outside of the [[ ]] in the same manner as above, and a [[ ]] may further be added independently.

Further, in other alternative embodiments, if the value of each element in the first configuration field may be 0, the associated syntax may be changed to the following syntax.

the1stField SEQUENCE (SIZE(1..4)) OF INTEGER (0..MaxValue1) OPTIONAL;

Here, MaxValue1 represents the largest range of values of each element in the first configuration field. Optionally, MaxValue1 may have a value of 4, 8, 16 or 32, or 3, 7, 16 or 32, or 3, 7, 15 or 31, which is not specifically limited by the disclosure.

Optionally, the second SRS resource set is an SRS resource set, which has the highest number of slot offsets configured by the first configuration field, of all the SRS resource sets configured with the at least one slot offset. For example, the number of bits occupied by the second field and the number of slot offsets configured for the second resource set meet one of:

$2^a \geq K$, or $2^a \geq K+1$.

Here, a represents the number of bits occupied by the second field, and K represents the number of slot offsets configured for the second SRS resource set.

Exemplarily, if the at least one SRS resource set is M SRS resource sets on the first BWP and N SRS resource sets of the M SRS resource sets are configured with a first configuration field, taking a case where all the SRS resource sets configured with the at least one slot offset are the N SRS resource sets as an example, $k\_1, k\_2, ...., k\_N$ elements are configured respectively in each of the first configuration fields, and K is marked as the maximum of $\{k\_1, k\_2, ..., k\_N\}$, then the size of the second field is a bits, and a is the smallest integer meeting the condition $2^a \geq K$ or $2^a \geq K+1$. In a case where the SRS resource set configuration does not have a first configuration field (that is, N=0), a=0 (and K=0), that is, the second field does not exist.

Of course, in other alternative embodiments, it is also possible not to determine the number of bits occupied by the second field according to the first SRS resource set on the first BWP. For example, it is also possible to determine the number of bits occupied by the second field according to the SRS resource sets, which are configured with the at least one slot offset, of the SRS resource sets on all configured carriers (whether active or not). Further, it is also possible to determine the number of bits occupied by the second field according to the SRS resource sets configured with the at least one slot offset on all configured carriers or on all activated carriers. Further, it is also possible to determine the number of bits occupied by the second field according to the SRS resource sets configured with the at least one slot offset on the carrier on which the configured first BWP is located.

Of course, it is described above that the number of bits occupied by the second field may be determined by the first indicative information or the configuration of the first configuration field of the second SRS resource set, but the disclosure is not limited thereto. For example, in other alternative embodiments, the number of bits occupied by the second field may also be set to a fixed value. Optionally, the fixed value may be a protocol-specified value.

In some embodiments, the method 200 may further includes the following operation.

In a case where the number of the at least one slot offset is greater than or equal to the value of the second field, the X-th slot offset of the at least one slot offset is determined as the first slot offset. Here, X represents the value of the second field, or X represents the value of the second field plus 1.

In other words, if a certain first SRS resource set is configured with the first configuration field, the value of the second field corresponds to an element in the first configuration field. In the embodiment, the first slot offset is determined by a fixed correspondence, which is conducive to reducing the implementation complexity of the protocol and product.

Exemplarily, assuming that the second field occupies 2 bits, then the information of the second field may be 00, 01, 10, 11, and the corresponding range of values thereof may be 0, 1, 2, 3. For the convenience of discussion, the following is taken as an example. It is assumed that the at least one slot offset includes four slots offsets, which are marked as A,B,C,D, respectively. Optionally, X may be determined according to the index of the at least one slot offset. For example, if the index of the at least one slot offset starts from 0, X represents the value of the second field. In such case, the value of the second field being 0 corresponds to the 0th slot offset A, the value of the second field being 1 corresponds to the 1st slot offset B, the value of the second field being 2 corresponds to the 2nd slot offset C, and the value of the second field being 3 corresponds to the 3rd slot offset D. If the index of the at least one slot offset starts from 1, X represents the value of the second field plus 1. In such case, the value of the second field being 0 corresponds to the 1st slot offset A, the value of the second field being 1 corresponds to the 2nd slot offset B, the value of the second field being 2 corresponds to the 3rd slot offset C, and the value of the second field being 3 corresponds to the 4th slot offset D.

In some implementations, the X-th slot offset of the at least one slot offset is determined as the first slot offset in an order from largest to smallest or from smallest to largest; or the X-th slot offset of the at least one slot offset is determined as the first slot offset in the configuration order of the at least one slot offset.

Exemplarily, it is assumed that four slot offsets are configured for the first SRS resource set, which are 0, 4, 2, 1, respectively. If the four slot offsets are arranged in an order from smallest to largest, the 1st slot offset to the 4th slot offset are 0, 1, 2, 4. If the four slot offsets are arranged in an order from largest to smallest, the 1st slot offset to the 4th slot offset are 4, 2, 1, 0. If the four slot offsets are arranged in the configuration order of the at least one slot offset, the 1st slot offset to the 4th slot offset are 0, 4, 2, 1. Further, if X=2, the first device may determine the X-th slot offset of the at least one slot offset as the first slot offset in an order from smallest to largest, that is, the first device may determine the slot offset 1 as the first slot offset. Alternatively, the first device may determine the X-th slot offset of the at least one slot offset as the first slot offset in an order from largest to smallest, that is, the first device may determine the slot offset 2 as the first slot offset. Alternatively, the first device may determine the X-th slot offset of the at least one slot offset as the first slot offset in the configuration order of the at least one slot offset, that is, the first device may determine the slot offset 4 as the first slot offset.

Optionally, the configuration order of the at least one slot offset is the order of the at least one slot offset in the first configuration field of the first SRS resource set.

Optionally, the configuration order of the at least one slot offset may be the configuration order in RRC signaling SRS-ResourceSet.

In some embodiments, the method 200 may further include the following operation.

In a case where the number of the at least one slot offset is greater than or equal to the value of the second field, a slot offset corresponding to the value of the second field is determined as the first slot offset based on a first correspondence. Here, the first correspondence includes at least one value and a slot offset corresponding to each of the at least one value, and the at least one value includes the value of the second field.

In other words, if a certain first SRS resource set is configured with the first configuration field, the value of the second field may correspond to an element in the first configuration field. In the embodiment, the first slot offset is determined by a more flexible first correspondence, that is, the first slot offset may be determined by information configured by the network, which is conducive to improving the flexibility of the first slot offset.

Exemplarily, assuming that the second field occupies 2 bits, then the range of values of the second field may include 00,01,10,11. It is further assumed that a first configuration field of a certain first SRS resource set is configured with four first slot offsets, which are marked as slot offset 1, slot offset 2, slot offset 3, and slot offset 4, respectively. In such case, the first correspondence may include the slot offset 1 corresponding to 00, the slot offset 2 corresponding to 01, the slot offset 3 corresponding to 10, and the slot offset 4 corresponding to 11. If the value of the second field is 00, the slot offset 1 corresponding to 00 may be determined as the first slot offset.

Optionally, different first SRS resource sets of the at least one SRS resource set may correspond to different or the same first correspondence.

Optionally, the first correspondence is agreed in a protocol or configured by the second device.

It is to be noted that in the embodiments of the disclosure, the expression "agreed in the protocol" may refer to being defined in a protocol. Optionally, the "protocol" may refer to a standard protocol in the field of communication, which may include, for example, an LTE protocol, an NR protocol, and relevant protocols applied to a future communication system, which is not specifically limited by the disclosure.

Optionally, the first correspondence is configured by radio resource control (RRC) signaling, or media access control control element (MAC CE).

In some embodiments, the method 200 may further include the following operation.

In a case where the number of the at least one slot offset is less than or equal to the value of the second field, one of the following is performed.

Determining the (mod (Y, N))-th slot offset or the (mod (Y, N) + 1)-th slot offset of the at least one slot offset as the first slot offset, here, Y represents the value of the second field, or Y represents the value of the second field plus 1, N represents the number of the at least one slot offset, and mod represents a modulo operation; determining the N-th slot offset of the at least one slot offset as the first slot offset; determining the 1st slot offset of the at least one slot offset as the first slot offset; determining the first slot offset as 0; sending the first SRS resource set without considering the second field; or sending the first SRS resource set without considering the first slot offset.

In other words, if the value of the second field (marked as Y) is greater than or equal to the number of elements in the first configuration field (marked as N), the first device may perform one of the following.

Determining the (mod (Y, N))-th slot offset or the (mod (Y, N) + 1)-th slot offset of the at least one slot offset as the first slot offset, here, Y represents the value of the second field, or Y represents the value of the second field plus 1, N represents the number of the at least one slot offset, and mod represents a modulo operation; determining the N-th slot offset of the at least one slot offset as the first slot offset; determining the 1st slot offset of the at least one slot offset as the first slot offset; determining the first slot offset as 0; sending the first SRS resource set without considering the second field; or sending the first SRS resource set without considering the first slot offset.

Exemplarily, if the numbering of the at least one slot offset starts from 0, the (mod (Y, N))-th slot offset of the at least one slot offset is determined as the first slot offset. If the numbering of the at least one slot offset starts from 1, the (mod (Y, N) + 1)-th slot offset of the at least one slot offset is determined as the first slot offset.

For ease of description, in the following, the first slot offset is determined based on one of the numbering methods (for example, it is selected that the numbering of the at least one slot offset starts from 1, or the numbering of the at least one slot offset starts from 0). Reference may be made to the relevant contents for a solution of determining the first slot offset based on the other numbering method. In other words, the first slot offset may be determined by a similar solution based on the other numbering method. In order to avoid repetition, no further description will be made with respect to the solution of determining the first slot offset based on the other numbering method.

In the embodiment, the (mod (Y, N))-th slot offset or the (mod (Y, N) + 1)-th slot offset of the at least one slot offset is determined as the first slot offset. Even if the value of the second field (marked as Y) is greater than or equal to the number of elements in the first configuration field (marked as N), the same or different first slot offsets may be indicated by different values of the second field, which is conducive to improving the indication effect of the second field. The N-th slot offset of the at least one slot offset is determined as the first slot offset, or the first slot offset is determined as 0, or the first SRS resource set is sent without considering the second field, or the first SRS resource set is sent without considering the first slot offset, which is conducive to simplifying the determination process of the first slot offset, and thereby is conducive to reducing the implementation complexity of the protocol and product.

Exemplarily, it is assumed that the first SRS resource set of the at least one SRS resource set is configured with two slot offsets (marked as the 1st slot offset and the 2nd slot offset respectively), the second field occupies 2 bits, the range of values of the second field may be 0, 1, 2, and 3, Y represents the value of the second field, and the second field with the values 0 and 1 is used to indicate the two slot offsets respectively. In such case, if the value of the second field is 0, the first slot offset corresponding to the first SRS resource set is the 1st slot offset of the two first SRS resource sets. If the value of the second field is 1, the first slot offset corresponding to the first SRS resource set is the 2nd slot offset of the two slot offsets.

If the value of the second field is 2, the second field may be used to indicate one of the following.

The (mod (2, 2) + 1)-th slot offset of the two slot offsets is determined as the first slot offset, that is, the 1st slot offset of the two slot offsets is determined as the first slot offset; the 2nd slot offset of the at least one slot offset is determined as the first slot offset; the 1st slot offset of the at least one slot offset is determined as the first slot offset; the first slot offset is determined as 0; the first SRS resource set is sent without considering the second field; or the first SRS resource set is sent without considering the first slot offset.

If the value of the second field is 3, the second field may be used to indicate one of the following.

The (mod (3, 2) + 1)-th slot offset of the two slot offsets is determined as the first slot offset, that is, the 2nd slot offset of the two slot offsets is determined as the first slot offset; the 2nd slot offset of the at least one slot offset is determined as the first slot offset; the 1st slot offset of the at least one slot offset is determined as the first slot offset; the first slot offset is determined as 0; the first SRS resource set is sent without considering the second field; or the first SRS resource set is sent without considering the first slot offset.

In short, in the embodiment, the value of the second field being 0 may correspond to the 1st slot offset, the value of the second field being 1 may correspond to the 2nd slot offset, the value of the second field being 2 may correspond to the 1st slot offset by a modulo operation, and the value of the second field being 3 may correspond to the 2nd slot offset by a modulo operation.

It is to be noted that, in general, it is necessary to transmit different SRS resource sets of the multiple SRS resource sets on different slots or on different symbols of the same slot. However, even if the multiple SRS resource sets correspond to different slot offsets, it can not be guaranteed that the multiple SRS resource sets are not on the same slot. However, in the embodiment, the first target slot corresponding to the first SRS resource set is determined based on the first slot offset on the basis of the second slot offset. Therefore, in the disclosure, there is no requirement on the first slot offsets corresponding to different first SRS resource sets of the multiple first SRS resource sets, that is, the first slot offsets corresponding to different first SRS resource sets of the multiple first SRS resource sets may be the same or may be different. For example, if the value of the second field (marked as Y) is greater than or equal to the number of elements in the first configuration field (marked as N), the same or different first slot offsets may also be indicated by the second field with different values.

In some implementations, the (mod (Y, N))-th slot offset or the (mod (Y, N) + 1)-th slot offset of the at least one slot offset is determined as the first slot offset in an order from largest to smallest or from smallest to largest; or the (mod (Y, N))-th slot offset or the (mod (Y, N) + 1)-th slot offset of the at least one slot offset is determined as the first slot offset in the configuration order of the at least one slot offset.

Exemplarily, it is assumed that the first SRS resource set is configured with four slot offsets, which are 0, 4, 2, 1, respectively. If the four slot offsets are arranged in an order from smallest to largest, the 1st slot offset to the 4th slot offset are 0, 1, 2, 4. If the four slot offsets are arranged in an order from largest to smallest, the 1st slot offset to the 4th slot offset are 4, 2, 1, 0. If the four slot offsets are arranged in the configuration order of the at least one slot offset, the 1st slot offset to the 4th slot offset are 0, 4, 2, 1. Further, if mod (Y, N) + 1 = 2, the first device may determine the (mod (Y, N) + 1)-th slot offset of the at least one slot offset as the first slot offset in an order from smallest to largest, that is, the first device may determine the slot offset 1 as the first slot offset. Alternatively, the first device may determine the (mod (Y, N) + 1)-th slot offset of the at least one slot offset as the first slot offset in an order from largest to smallest, that is, the first device may determine the slot offset 2 as the first slot offset. Alternatively, the first device may determine the (mod (Y, N) + 1)-th slot offset of the at least one slot offset as the first slot offset in the configuration order of the at least one slot offset, that is, the first device may determine the slot offset 4 as the first slot offset.

Optionally, the configuration order of the at least one slot offset may be the configuration order in RRC signaling SRS-ResourceSet.

In some embodiments, each first SRS resource set of the at least one SRS resource set is configured with the same number of slot offsets; or each of the at least one SRS resource set is configured with the same number of slot offsets.

In the embodiment, the first SRS resource set is designed to be configured with the same number of slot offsets, that is, all the SRS resource sets, which are configured with the first configuration field, have the same number of elements configured in the first configuration field. In this way, the configuration is constrained, which is conducive to reducing the complexity of the network configuration and reducing the implementation complexity of the network device.

Similarly, the SRS resource set of the at least SRS resource set is designed to be configured with the same number of slot offsets, that is, all the SRS resource sets have the same number of elements configured in the first configuration field. Similarly, the configuration is constrained, which is conducive to reducing the complexity of the network configuration and reducing the implementation complexity of the network device.

In some embodiments, the first SRS resource set is configured with $2^a$ slot offsets. Here, a represents the number of bits occupied by the second field.

In the embodiment, the first SRS resource set is designed to be configured with $2^a$ slot offsets, that is, all the SRS resource sets, which are configured with the first configuration field, have $2^a$ elements configured in the first configuration field, which is conducive to simplifying the protocol design and avoiding some subsequent additional rules, and thereby may reduce the implementation complexity of the product.

In some embodiments, the method 200 may further include the following operation.

The first target slot is determined based on the first slot and the first slot offset. Here, the first slot is determined by a slot where the first control information is located and the second slot offset.

In some implementations, the T-th available slot counting from the first slot or after the first slot is determined as the first target slot. Here, T represents the first slot offset.

Optionally, if T=0, the T-th available slot counting from the first slot or after the first slot is the first slot.

Optionally, the first device is not configured with a slot offset for a carrier aggregation (CA), and the first slot meets the following condition.

$$n_1 = \left\lfloor n \cdot \frac{2^{\mu_{SRS}}}{2^{\mu_{PDCCH}}} \right\rfloor + k$$

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $n_1$ represents the first slot, and k represents the second slot offset.

Optionally, the first device is configured with a slot offset for a carrier aggregation (CA), and the first slot meets the following condition.

$$n_1 = \left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor .$$

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N^{CA}_{slot, offset, PDCCH}$ and $\mu_{offset,PDCCH}$ are $N^{CA}_{slot, offset}$ and $\mu_{offset}$ which depend on an upper layer configuration and are configured to receive a slot offset for the carrier aggregation (CA) of the physical downlink control channel (PDCCH), respectively, $N^{CA}_{slot,offset,SRS}$ and $\mu_{offset,SRS}$ are $N^{CA}_{slot,offset}$ and $\mu_{offset}$ which depend on the upper layer configuration and are configured to transmit a slot offset for the carrier aggregation (CA) of the SRS, respectively, $n_1$ represents the first slot, and k represents the second slot offset.

In some embodiments, the first device is not configured with a slot offset for a carrier aggregation (CA), and the first target slot meets the following condition.

$$n' = \left\lfloor n \cdot \frac{2^{\mu_{SRS}}}{2^{\mu_{PDCCH}}} \right\rfloor + k + z .$$

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, n' represents the first target slot, k represents the second slot offset, and z represents the number of slots to be offset determined based on the first slot offset.

In other words, if a certain SRS resource set is configured with the first configuration field, the first device determines to send the certain first SRS resource set on slot n'.

Optionally, if a certain SRS resource set is not configured with the first configuration field, z=0.

Optionally, if the first slot offset corresponding to a certain SRS resource set is 0 (that is, T=0), z=0.

Optionally, the z representing the number of slots to be offset determined based on the first slot offset includes: z representing the T-th available slot counting from $n_1$ or after $n_1$.

Here, T represents the first slot offset and $n_1$ meets the following condition.

$$n_1 = \left\lfloor n \cdot \frac{2^{\mu_{SRS}}}{2^{\mu_{PDCCH}}} \right\rfloor + k .$$

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $n_1$ represents the first slot, and k represents the second slot offset.

In short, slot $\left\lfloor n \cdot \dfrac{2^{\mu_{SRS}}}{2^{\mu_{PDCCH}}} \right\rfloor + k + z$ corresponds to the T-th available slot counting from or after slot

$$\left\lfloor n \cdot \frac{2^{\mu_{SRS}}}{2^{\mu_{PDCCH}}} \right\rfloor + k$$
.

Here, the T-th available slot counting from slot $\left\lfloor n \cdot \frac{2^{\mu_{SRS}}}{2^{\mu_{PDCCH}}} \right\rfloor + k$ may be understood as the T-th available slot obtained by taking slot $\left\lfloor n \cdot \frac{2^{\mu_{SRS}}}{2^{\mu_{PDCCH}}} \right\rfloor + k$ as the starting slot. The T-th available slot after slot $\left\lfloor n \cdot \frac{2^{\mu_{SRS}}}{2^{\mu_{PDCCH}}} \right\rfloor + k$ may be understood as the T-th available slot obtained by taking the first slot after slot $\left\lfloor n \cdot \frac{2^{\mu_{SRS}}}{2^{\mu_{PDCCH}}} \right\rfloor + k$ as the starting slot.

Assuming that T=1 and both slot n' and slot $n_1$ are available slots, then n'=$n_1$ or n'=$n_1$+1.

In other words, it is assumed that T=1 and both slot $\left\lfloor n \cdot \frac{2^{\mu_{SRS}}}{2^{\mu_{PDCCH}}} \right\rfloor + k+1$ and slot

$$\left\lfloor n \cdot \frac{2^{\mu_{SRS}}}{2^{\mu_{PDCCH}}} \right\rfloor + k$$

are available slots.

Exemplarily, if slot $\left\lfloor n \cdot \frac{2^{\mu_{SRS}}}{2^{\mu_{PDCCH}}} \right\rfloor + k + z$ corresponds to the T-th available slot counting from slot $\left\lfloor n \cdot \frac{2^{\mu_{SRS}}}{2^{\mu_{PDCCH}}} \right\rfloor + k$, n' is $\left\lfloor n \cdot \frac{2^{\mu_{SRS}}}{2^{\mu_{PDCCH}}} \right\rfloor + k$.

Exemplarily, if slot $\left\lfloor n \cdot \frac{2^{\mu_{SRS}}}{2^{\mu_{PDCCH}}} \right\rfloor + k + z$ corresponds to the T-th available slot after slot $\left\lfloor n \cdot \frac{2^{\mu_{SRS}}}{2^{\mu_{PDCCH}}} \right\rfloor + k$, n' is $\left\lfloor n \cdot \frac{2^{\mu_{SRS}}}{2^{\mu_{PDCCH}}} \right\rfloor + k+1$.

In some embodiments, the first device is configured with a slot offset for a carrier aggregation (CA), and the first target slot meets the following condition.

$$n' = \left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor + z$$

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N_{slot, offset, PDCCH}^{CA}$ and $\mu_{offset,PDCCH}$ are $N_{slot, offset}^{CA}$ and $\mu_{offset}$ which depend on an upper layer configuration and are configured to receive a slot offset for the carrier aggregation (CA) of the physical downlink control channel (PDCCH), respectively, $N_{slot,offset,SRS}^{CA}$ and $\mu_{offset,SRS}$ are $N_{slot,offset}^{CA}$ and $\mu_{offset}$ which depend on the upper layer configuration and are configured to transmit a slot offset for the carrier aggregation (CA) of the SRS, respectively, n' represents the first target slot, k represents the second slot offset, and z represents the number of slots to be offset determined based on the first slot offset.

In other words, if a certain first SRS resource set is configured with the first configuration field, the first device determines to send the certain first SRS resource set on slot n'.

Optionally, if a certain SRS resource set is not configured with the first configuration field, z=0.

Optionally, if the first slot offset corresponding to a certain SRS resource set is 0 (that is, T=0), z=0.

Optionally, the z representing the number of slots to be offset determined based on the first slot offset includes: z representing the T-th available slot counting from $n_1$ or after $n_1$.

Here, T represents the first slot offset and $n_1$ meets the following condition.

$$n_1 = \left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor$$

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N_{slot, offset, PDCCH}^{CA}$ offset, PDCCH and $\mu_{offset,PDCCH}$ are $N_{slot, offset}^{CA}$ and $\mu_{offset}$ which depend on an upper layer configuration and are configured to receive a slot offset for the carrier aggregation (CA) of the physical downlink control channel (PDCCH), respectively, $N_{slot,offset,SRS}^{CA}$ and $\mu_{offset,SRS}$ are $N_{slot,offset}^{CA}$ and $\mu_{offset}$ which depend on the upper layer configuration and are configured to transmit a slot offset for the carrier aggregation (CA) of the SRS, respectively, $n_1$ represents the first slot, and k represents the second slot offset.

In short, slot $\left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor + z$ corresponds to the T-th available slot counting from or after slot $\left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor$.

Here, the T-th available slot counting from slot $\left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor$ may be understood as the T-th avail-

$$\left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor$$

able slot obtained by taking slot as the starting slot. The T-th available slot after slot

$$\left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor$$

may be understood as the T-th available slot obtained by taking the first slot after slot

$$\left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor$$

as the starting slot.

Assuming that T=1 and both slot n' and slot $n_1$ are available slots, then n'=$n_1$ or n'=$n_1$+1.

In other words, it is assumed that T=1 and both slot

$$\left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor + 1 \quad \text{and} \quad \text{slot}$$

$$\left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor$$

are available slots.

Exemplarily, if slot

$$\left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor + z$$

corresponds to the T-th available slot counting from slot

$$\left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor, \quad \text{n' is}$$

$$\left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor.$$

Exemplarily, if slot

$$\left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor + z$$

corresponds to the T-th available slot after slot

$$\left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor, \quad \text{n' is} \quad \left\lfloor n \cdot \frac{2^{\mu_{SRS}}}{2^{\mu_{PDCCH}}} \right\rfloor + k + 1 .$$

In some embodiments, the method 200 may further include the following operation.

Configuration information sent by the second device is received. Here, the configuration information is configured to configure one or more SRS resource sets, each of the one or more SRS resource sets is configured with at least one SRS resource, and the one or more SRS resource sets includes the at least one SRS resource set.

Exemplarily, the first device receives configuration information sent by the second device (the second device may be a network device or a second terminal device) by RRC signaling, which is used to configure the one or more SRS resource sets. Each SRS resource set includes one or more SRS resources, and the SRS resource is configured by RRC signaling SRS-Resource. Each SRS resource set is aperiodic, that is, the resourceType corresponding to each SRS resource set is aperiodic. The first SRS resource set is one of the one or more SRS resource sets.

Optionally, the at least one SRS resource set includes multiple SRS resource sets whose usage fields are configured as antenna switching, and different SRS resource sets of the multiple SRS resource sets correspond to different transmission slots. The multiple SRS resource sets correspond to an antenna switching configuration of a certain "xTyR" type.

Exemplarily, the usage fields of some of the at least one SRS resource set are configured as antenna switching, or the usage fields of all of the at least one SRS resource set are configured as antenna switching. Exemplarily, the multiple SRS resource sets correspond to an antenna switching configuration of a certain "xTyR" type. Exemplarily, the SRS resource set of the one or more SRS resource sets may be configured as any one of {beamManagement, codebook, nonCodebook, antennaSwitching}.

It is to be understood that, in a case where one of the multiple SRS resource sets is the first SRS resource set as described above, the transmission slot is the first target slot. In a case where one of the multiple SRS resource sets is the third SRS resource set as described below, the transmission slot is the second target slot.

Optionally, each of the multiple SRS resource sets is configured with a corresponding trigger state.

In the embodiment, SRS resource sets of the multiple SRS resource sets may be configured with different corresponding trigger states, which is conducive to relaxing the protocol restrictions and improving the flexibility of network configuration and triggering.

Exemplarily, the SRS resource set of the multiple SRS resource sets is configured with one or more (marked as M) triggering states, and each triggering state corresponds to a value of the SRS request field in the DCI, that is, a code point. Optionally, the one or more trigger states may be configured by aperiodicSRS-ResourceTrigger and aperiodicSRS-ResourceTriggerList in the SRS-ResourceSet IE, here, the aperiodicSRS-ResourceTrigger configures one value and the aperiodicSRS-ResourceTriggerList configures one or more values.

Optionally, the multiple SRS resource sets are configured with the same number of slot offsets. The multiple SRS resource sets correspond to an antenna switching configuration of a certain "xTyR" type.

In the embodiment, the multiple SRS resource sets are designed to be configured with the same number of slot offsets, that is, the complexity of antenna switching of the terminal is reduced by adding restrictions.

In some embodiments, the method 200 may further include the following operation.

Capability information of the first device is reported.

Here, the capability information is configured to indicate that the first device supports configuring a first configuration field for an SRS resource set, and the first configuration field is configured to configure a slot offset for the SRS resource set; and/or the capability information is configured to indicate that the first device supports including the second field in control information; and/or the capability information is configured to indicate that the first device supports dynamic slot offset.

Of course, in other alternative embodiments, the capability information may also be configured to indicate whether the first device supports configuring a first configuration field for an SRS resource set, and the first configuration field is configured to configure a slot offset for the SRS resource set; and/or the capability information is configured to indicate whether the first device supports including the second field in control information; and/or the capability information is configured to indicate whether the first device supports dynamic slot offset, which are not specifically limited by the disclosure.

Optionally, the capability information is reported via radio resource control (RRC) signaling, or media access control control element (MAC CE).

Optionally, the capability information of the first device may be reported in one of the following manners.

The capability information is reported for each band combination;

the capability information is reported for each band range;
the capability information is reported for each band;
the capability information is reported for each carrier; or
the capability information is reported for each terminal device.

In the embodiment, the capability information is designed to be reported for band, that is, different bands may independently report the corresponding capability (per band), which allows the first device to realize a greater degree of freedom. For example, the first device may support dynamic slot offset on a certain band or certain bands, and does not support dynamic slot offset on other bands, such that there may be more first devices supporting dynamic slot offset.

The capability information is designed to be reported for band combination, that is, different band combinations may report independently (per band per band combination), which allows the first device to realize a greater degree of freedom. For example, the first device may support dynamic slot offset on a certain band combination or certain band combinations, and does not support dynamic slot offset on other band combinations, such that there may be more first devices supporting dynamic slot offset.

The capability information is designed to be reported independently according to each band in a band combination, that is, bands of different band combinations may report independently, which allows the first device to realize a greater degree of freedom. For example, the first device may not support dynamic slot offset on a certain CA, but support dynamic slot offset on certain bands on another CA combination, such that there may be more first devices supporting dynamic slot offset.

The capability information is designed to be reported independently according to each carrier on each band in a band combination, that is, different carrier CCs in bands of different band combinations may report independently (per CC per band per band combination). That is, different band combinations report independently, and different carriers on a band may also report independently, which allows the first device to realize a greater degree of freedom, such that there may be more first devices supporting dynamic slot offset.

The capability information is designed to be reported according to the frequency range (FR), that is, different FRs may report independently (per FR), for example, FR1 and FR2 report independently, which allows the first device to realize a greater degree of freedom. For example, the first device does not support dynamic slot offset at low frequency (FR1) but supports dynamic slot offset at FR2 (high frequency), such that there may be more first devices supporting dynamic slot offset.

The capability information is designed to be reported for UE (per UE), that is, if a UE reports the capability information, the capability may be supported on all bands, which may reduce the signaling overhead of the first device reporting the capability.

Optionally, the capability information may be reported for each band combination in one of the following manners.

The capability information is reported for each band of the each band combination; or the capability information is reported for each carrier on each band of the each band combination.

In some embodiments, the first control information is at least one of downlink control information format 0_1 (DCI format 0_1), downlink control information format 0_2 (DCI format 0_2), downlink control information format 1_1 (DCI format 1_1), downlink control information format 1_2 (DCI format 1_2), or downlink control information format 2_3 (DCI format 2_3).

In some embodiments, for a third SRS resource set of the at least one SRS resource set, aperiodic SRS transmission is performed on a second target slot based on the third SRS resource set.

Here, the third SRS resource set is an SRS resource set, which is not configured with the at least one slot offset, of the at least one SRS resource set; and the second target slot is determined based on the second slot offset.

In other words, the third SRS resource set is an SRS resource set, which is not configured with the first configuration field, of the at least one SRS resource set, and the first configuration field is used to configure the at least one slot offset for the SRS resource set.

It is worth noting that the second slot offset corresponding to the third SRS resource set always exists. For example, if an offset value is configured for the third SRS resource set by RRC, the second slot offset corresponding to the third SRS resource set may be the offset value configured by RRC. If no offset value is configured by RRC, the second offset value corresponding to the third SRS resource set may be 0.

Optionally, the first device is not configured with a slot offset for a carrier aggregation (CA), and the second target slot meets the following condition.

$$n' = \left\lfloor n \cdot \frac{2^{\mu_{SRS}}}{2^{\mu_{PDCCH}}} \right\rfloor + k$$

.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, n' represents the second target slot, and k represents the second slot offset.

Optionally, the first device is configured with a slot offset for a carrier aggregation (CA), and the second target slot meets the following condition.

$$n' = \left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor .$$

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N^{CA}_{slot, offset, PDCCH}$ and $\mu_{offset,PDCCH}$ are $N^{CA}_{slot, offset}$ and $\mu_{offset}$ which depend on an upper layer configuration and are configured to receive a slot offset for the carrier aggregation (CA) of the physical downlink control channel (PDCCH), respectively, $N^{CA}_{slot,offset,SRS}$ and $\mu_{offset,SRS}$ are $N^{CA}_{slot,offset}$ and $\mu_{offset}$ which depend on the upper layer configuration and are configured to transmit a slot offset for the carrier aggregation (CA) of the SRS, respectively, and n' represents the second target slot.

The solution of the disclosure is illustrated with specific embodiments as follows, taking the first device as the terminal device and the second device as the network device.

The terminal device reports capability information to the network device. Here, the capability information is configured to indicate that the terminal device supports configuring a first configuration field for an SRS resource set, and the first configuration field is configured to configure a slot offset for the SRS resource set; and/or the capability information is configured to indicate that the terminal device supports including the second field in control information; and/or the capability information is configured to indicate that the terminal device supports dynamic slot offset.

For the first BWP, the network device provides three (three is taken as an example and it may be a larger number) aperiodic SRS resource sets (marked as SRS resource set 1, SRS resource set 2, and SRS resource set 3, respectively) for the terminal device, that is, resourceType in each SRS resource set is configured as aperiodic. Here, SRS resource set 1 is not configured with the first configuration field, SRS resource set 2 has two elements indicated in the first configuration field (the 1st and 2nd elements are marked as x0 and x1, respectively), and SRS resource set 3 has four elements indicated in the first configuration field (the 1st to the 4th elements are marked as y0, y1, y2, y3, respectively).

The network device sends first control information to the terminal device to trigger aperiodic SRS transmission on the first BWP. The second field in the first control information occupies a bits.

The number of the a bits is determined according to one of the following methods.

Method 1:

The terminal device may determine the number of bits occupied by the second field based on the first indicative information.

The first indicative information is configured to indicate that the first control information includes the second field. Specifically, it is determined that the second field occupies 0 bit in a case where the first indicative information is not received by the terminal device; and/or it is determined that the second field occupies 0 bit in a case where the network device does not send or configure the first indicative information; and/or it is determined that the second field occupies a first number of bits in a case where the first indicative information is received by the terminal device. For example, the first number may be 2 or other values. In the embodiment, the first indicative information is designed to indicate that the first control information includes the second field. In this way, there are only two cases, i.e., the case where the second field exists, and the case where the second field does not exist. That is, the number of bits occupied by the second field is a fixed value, which is conducive to reducing the signaling overhead of the first indicative information, and furthermore, reducing the protocol complexity.

Exemplarily, in conjunction with the embodiment, the number of the a bits may be determined by the following method.

Method 1-1: If the terminal device does not receive the first indicative information sent by the network device, or the network device does not send or configure the first indicative information, the size of the second field is 0 bit, that is, the second field does not exist.

Method 1-2: If the network device sends or configures the first indicative information to the terminal device, or the terminal device receives the first indicative information sent or configured by the network device, the size of the second field is 2 bits.

Method 2:

The terminal device determines the number of bits occupied by the second field based on the first indicative information.

The first indicative information is configured to indicate the number of bits occupied by the second field. Optionally, it is determined that the second field occupies 0 bit in a case where the first indicative information is not received by the terminal device; and/or it is determined that the second field occupies 0 bit in a case where the network device does not send or configure the first indicative information; and/or it is determined that the second field occupies a second number of bits in a case where the first indicative information is received by the terminal device and the first indicative information indicates a first value; and/or it is determined that the second field occupies a third number of bits in a case where the first indicative information is received by the terminal device and the first indicative information indicates a second value. For example, the second number may be 1 or other values, and the third number may be 2 or other values. In the embodiment, the first indicative information is designed to indicate the number of bits occupied by the second field, which may enable 3 cases of the second field. In some cases, 1 bit of overhead in the DCI may be saved.

Exemplarily, in conjunction with the embodiment, the number of the a bits may be determined by the following method.

Method 2-1: If the terminal device does not receive the first indicative information sent by the network device, or the network device does not send or configure the first indicative information, the size of the second field is 0 bit, that is, the second field does not exist.

Method 2-2: If the network device sends or configures the first indicative information to the terminal device, or the terminal device receives the first indicative information sent or configured by the network device, and the first indicative information is the first value, the size of the second field is 1 bit.

Method 2-3: If the network device sends or configures the first indicative information to the terminal device, or the terminal device receives the first indicative information sent or configured by the network device, and the first indicative information is the second value, the size of the second field is 2 bits.

Method 3:

The terminal device determines the number of bits occupied by the second field based on a first configuration field of a second SRS resource set of all SRS resource sets configured with the at least one slot offset. Here, the first configuration field is configured to provide the at least one slot offset for the SRS resource set. In the embodiment, the existence of the second field in the first control information and/or the size of the second field may be determined based on the configuration of the first configuration field of the second SRS resource set of all SRS resource sets configured with the at least one slot offset, which prevents the network device from sending information for determining the size of the second field, and is conducive to saving signaling overhead.

For example, the terminal device determines the number of bits occupied by the second field based on the number of slot offsets configured for the second SRS resource set. Here, the second SRS resource set is an SRS resource set, which has the highest number of slot offsets configured by the first configuration field, of all the SRS resource sets configured with the at least one slot offset. For example, the number of bits occupied by the second field and the number of slot offsets configured for the second resource set meet one of:

$$2^a \geq K, \text{ or } 2^a \geq K+1.$$

Here, a represents the number of bits occupied by the second field, and K represents the number of slot offsets configured for the second SRS resource set.

Exemplarily, if the at least one SRS resource set is M SRS resource sets on the first BWP and N SRS resource sets of the M SRS resource sets are configured with a first configuration field, taking a case where all the SRS resource sets configured with the at least one slot offset are the N SRS resource sets as an example, $k\_1, k\_2, ...., k\_N$ elements are configured respectively in each of the first configuration fields, and K is marked as the maximum of $\{k\_1, k\_2, ..., k\_N\}$, then the size of the second field is a bits, and a is the smallest integer meeting the condition $2^a \geq K$ or $2^a \geq K+1$. In a case where the SRS resource set configuration does not have a first configuration field (that is, N=0), a=0 (and K=0), that is, the second field does not exist.

Of course, in other alternative embodiments, it is also possible not to determine the number of bits occupied by the second field according to the first SRS resource set on the first BWP. For example, it is also possible to determine the number of bits occupied by the second field according to the SRS resource sets, which are configured with the at least one slot offset, of the SRS resource sets on all configured carriers (whether active or not). Further, it is also possible to determine the number of bits occupied by the second field according to the SRS resource sets configured with the at least one slot offset on all configured carriers or on all activated carriers. Further, it is also possible to determine the number of bits occupied by the second field according to the SRS resource sets configured with the at least one slot offset on the carrier on which the configured first BWP is located.

In conjunction with the embodiment, the number of the a bits may be determined as follows.

The terminal device may determine according to the maximum value of the number of elements, which is indicated by the first configuration field in the three SRS resource sets. That is, the maximum number is 4, and the number of bits occupied by the second field and the number of slot offsets configured for the second resource set meet $2^a \geq K$. Here, a represents the number of bits occupied by the second field and K represents the number of slot offsets configured for the second SRS resource set. That is, $2^2 = 4$, i.e., the size of the second field is 2 bits.

Embodiment 1:

In the embodiment, for a third SRS resource set of the above at least one SRS resource set, the terminal device may perform aperiodic SRS transmission on a second target slot based on the third SRS resource set. Here, the third SRS resource set is an SRS resource set, which is not configured with the at least one slot offset, of the at least one SRS resource set; and the second target slot is determined based on the second slot offset.

In conjunction with the embodiment, the SRS resource set 1 may serve as an example of the third SRS resource set described above.

In other words, the first control information triggers aperiodic SRS transmission of the SRS resource set 1, and the transmission is on slot n'.

Specifically, if the first device is not configured with a slot offset for a carrier aggregation (CA), slot n' meets the following condition.

$$n' = \left\lfloor n \cdot \frac{2^{\mu_{SRS}}}{2^{\mu_{PDCCH}}} \right\rfloor + k$$

.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, and k represents the second slot offset.

If the first device is configured with a slot offset for a carrier aggregation (CA), slot n' meets the following condition.

$$n' = \left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor$$

.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N_{\text{slot, offset, PDCCH}}^{\text{CA}}$ and $\mu_{offset,PDCCH}$ are $N_{\text{slot, offset}}^{\text{CA}}$ and $\mu_{offset}$ which depend on an upper layer configuration and are configured to receive a slot offset for the carrier aggregation (CA) of the physical downlink control channel (PDCCH), respectively, and $N_{slot,offset,SRS}^{CA}$ and $\mu_{offset,SRS}$ are $N_{slot,offset}^{CA}$ and $\mu_{offset}$ which depend on the upper layer configuration and are configured to transmit a slot offset for the carrier aggregation (CA) of the SRS, respectively.

Embodiment 2:

In the embodiment, for a first SRS resource set of the at least one SRS resource set, the terminal device performs aperiodic SRS transmission on a first target slot based on the first SRS resource set. Here, the first SRS resource set is an SRS resource set, which is configured with at least one slot offset, of the at least one SRS resource set; the first control information further includes a second field; the second field is configured to indicate a first slot offset, which corresponds to the first SRS resource set, of the at least one slot offset; and the first target slot is determined based on at least one of the first slot offset or the second slot offset.

In conjunction with the embodiment, the SRS resource set 2 may serve as an example of the first SRS resource set described above.

In other words, the first control information triggers aperiodic SRS transmission of the SRS resource set 2, and the transmission is on slot n'.

In such case, slot n' may be determined based on the first slot offset corresponding to the SRS resource set 2 and the second slot offset corresponding to the SRS resource set 2. If the value of the second field is marked as f, then:

if the number of the at least one slot offset configured for the SRS resource set 2 (that is, 2) is greater than or equal to the value of the second field, the X-th slot offset of the at least one slot offset is determined as the first slot offset. Here, X represents the value of the second field (if x0, x1 correspond to the 0th and 1st slot offsets respectively), or X represents the value of the second field plus 1 (if x0, x1 correspond to the 1st and 2nd slot offsets respectively). For example, the case f=0 corresponds to x0 (marked as T); and the case f=1 corresponds to x1 (marked as T).

If the number of the at least one slot offset configured for the SRS resource set 2 (that is, 2) is less than or equal to the value of the second field, any one of the following is performed (in the following example, it is assumed that x0, x1 corresponds to the 1st and 2nd slot offsets respectively).

Method 1:

The (mod (Y, N) + 1)-th slot offset of the at least one slot offset is determined as the first slot offset. Here, Y represents the value of the second field, or Y represents the value of the second field plus 1, N represents the number of the at least one slot offset, and mod represents a modulo operation. For example, the case f=2 corresponds to x0 (marked as T), mod(2,2)+1=1. Further, the case f=3 corresponds to x1 (marked as T), mod(3,2)+2=2.

Method 2:

The N-th slot offset of the at least one slot offset is determined as the first slot offset. Here, N represents the number of the at least one slot offset. For example, the case f=2 corresponds to x1 (marked as T); and the case f=3 corresponds to x1 (marked as T).

Method 3:

The 1st slot offset of the at least one slot offset is determined as the first slot offset. For example, the case f=2 corresponds to x0 (marked as T); and the case f=3 corresponds to x0 (marked as T).

Method 4:

The first slot offset is determined as 0; or the first SRS resource set is sent without considering the second field; or the first SRS resource set is sent without considering the first slot offset. For example, in a case where f=2 or 3, there is no correspondence. That is, only the second slot offset is adopted to determine the sending of the aperiodic SRS on slot n'.

If the network device does not provide a ca-SlotOffset for the terminal device, the terminal device transmits the aperiodic SRS transmission corresponding to the SRS resource set 2 on slot n'. Here, the slot n' meets the following condition.

$$n' = \left\lfloor n \cdot \frac{2^{\mu_{SRS}}}{2^{\mu_{PDCCH}}} \right\rfloor + k + z \ .$$

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, k represents the second slot offset, and z represents the number of slots to be offset determined based on the first slot offset.

In short, slot n' is the T-th available slot counting from or after slot $\left\lfloor n \cdot \frac{2^{\mu_{SRS}}}{2^{\mu_{PDCCH}}} \right\rfloor + k$ .

If the network device provides a ca-SlotOffset for the terminal device, the terminal device transmits the aperiodic SRS transmission corresponding to the SRS resource set 2 on slot n'. Here, the slot n' meets the following condition.

$$n' = \left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor + z$$

.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N_{slot, offset, PDCCH}^{CA}$ and $\mu_{offset,PDCCH}$ are $N_{slot, offset}^{CA}$ and $\mu_{offset}$ which depend on an upper layer configuration and are configured to receive a slot offset for the carrier aggregation (CA) of the physical downlink control channel (PDCCH), respectively, $N_{slot,offset,SRS}^{CA}$ and $\mu_{offset,SRS}$ are $N_{slot,offset}^{CA}$ and $\mu_{offset}$ which depend on the upper layer configuration and are configured to transmit a slot offset for the carrier aggregation (CA) of the SRS, respectively, k represents the second slot offset, and z represents the number of slots to be offset determined based on the first slot offset.

In short, slot n' is the T-th available slot counting from or after slot

$$\left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor$$

.

Embodiment 3:

In the embodiment, for a first SRS resource set of the at least one SRS resource set, the terminal device performs aperiodic SRS transmission on a first target slot based on the first SRS resource set. Here, the first SRS resource set is an SRS resource set, which is configured with at least one slot offset, of the at least one SRS resource set; the first control information further includes a second field; the second field is configured to indicate a first slot offset, which corresponds to the first SRS resource set, of the at least one slot offset; and the first target slot is determined based on at least one of the first slot offset or a second slot offset.

In conjunction with the embodiment, the SRS resource set 3 may serve as an example of the first SRS resource set described above.

In other words, the first control information triggers aperiodic SRS transmission of the SRS resource set 3, and the transmission is on slot n'.

In such case, slot n' may be determined based on the first slot offset corresponding to the SRS resource set 3 and the second slot offset corresponding to the SRS resource set 3. If the number of the at least one slot offset configured for the SRS resource set 3 (that is, 4) is greater than or equal to the value of the second field, the X-th slot offset of the at least one slot offset is determined as the first slot offset. Here, X represents the value of the second field, or X represents the value of the second field plus 1.

For example, if the value of the second field is marked as f, then:

the case f=0 corresponds to y0 (marked as T);
the case f=1 corresponds to y1 (marked as T).
the case f=2 corresponds to y2 (marked as T); and
the case f=3 corresponds to y3 (marked as T).

If the network device does not provide a ca-SlotOffset for the terminal device, the terminal device transmits the aperiodic SRS transmission corresponding to the SRS resource set 3 on slot n'. Here, slot n' meets the following condition.

$$n' = \left\lfloor n \cdot \frac{2^{\mu_{SRS}}}{2^{\mu_{PDCCH}}} \right\rfloor + k + z$$

.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, k represents the second slot offset, and z represents the number of slots to be offset determined based on the first slot offset.

$$\left\lfloor n \cdot \frac{2^{\mu_{SRS}}}{2^{\mu_{PDCCH}}} \right\rfloor + k$$

In short, slot n' is the T-th available slot counting from or after slot

If the network device provides a ca-SlotOffset for the terminal device, the terminal device transmits the aperiodic SRS transmission corresponding to the SRS resource set 3 on slot n'. Here, slot n' meets the following condition.

$$n' = \left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor + z$$

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N^{CA}_{slot, offset, PDCCH}$ and $\mu_{offset,PDCCH}$ are $N^{CA}_{slot, offset}$ and $\mu_{offset}$ which depend on an upper layer configuration and are configured to receive a slot offset for the carrier aggregation (CA) of the physical downlink control channel (PDCCH), respectively, $N^{CA}_{slot,offset,SRS}$ and $\mu_{offset,SRS}$ are $N^{CA}_{slot,offset}$ and $\mu_{offset}$ which depend on the upper layer configuration and are configured to transmit a slot offset for the carrier aggregation (CA) of the SRS, respectively, k represents the second slot offset, and z represents the number of slots to be offset determined based on the first slot offset.

In short, slot n' is the T-th available slot counting from or after slot

$$\left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor$$

The following is an exemplary illustration of the range of the available slots described in the disclosure.

An available slot is a slot in which the uplink (UL) symbols and flexible symbols are capable of transmitting all SRS resources in the SRS resource set, and optionally, the interval between the slot and the first control information is greater than or equal to the minimum requirement stipulated by the protocol (i.e., the minimum timing requirement between triggering PDCCH and all the SRS resources in the resource set).

Alternatively, an available slot is a slot where the downlink (DL) symbols in the slot have no overlapping with all the SRS resources in the SRS resource set in time domain, and optionally, the interval between the slot and the first control information is greater than or equal to the minimum requirement stipulated by the protocol (i.e., the minimum timing requirement between triggering PDCCH and all the SRS resources in the resource set).

The preferred implementations of the disclosure are described in detail above in conjunction with the drawings, but the disclosure is not limited to the specific details in the above implementations. Within the scope of the technical conception of the disclosure, a variety of simple variations of the technical solution of the disclosure may be carried out, and all of these simple variations fall within the scope of protection of the disclosure. For example, the various specific technical features described in the above specific implementations may be combined in any suitable manner without contradiction, and in order to avoid unnecessary repetition, various possible combinations are not separately illustrated in the disclosure. Further, for example, various different implementations of the disclosure may be combined in any manner, and as long as they do not contradict the idea of the disclosure, they should be regarded as the contents disclosed in the disclosure.

It is further to be understood that in the various method embodiments of the disclosure, the magnitude of the serial numbers of the above processes does not imply the order of execution, and the order of execution of the processes shall be determined by their functions and internal logic, and shall not constitute any limitation to the implementation process of the embodiments of the disclosure. Furthermore, in the embodiments of the disclosure, the terms "downlink" and "uplink" are used to indicate a transmission direction of signals or data, here, "downlink" is used to indicate that the transmission direction of signals or data is a first direction from the site to the user device of the cell, and "uplink" is used to indicate that the transmission direction of signals or data is a second direction from the user device of the cell to the site, for example, "downlink signal" indicates that the signal is transmitted in the first direction. In addition, in the embodiments of the disclosure, the term "and/or" is only a description of an association relationship of associated objects, representing that there may be three kinds of relationships. For example, A and/or B may represent three conditions: i.e., independent existence of A, existence of both A and B and independent existence of B. In addition, the character "/" herein usually represents that the previous and next associated objects are in an "or" relationship.

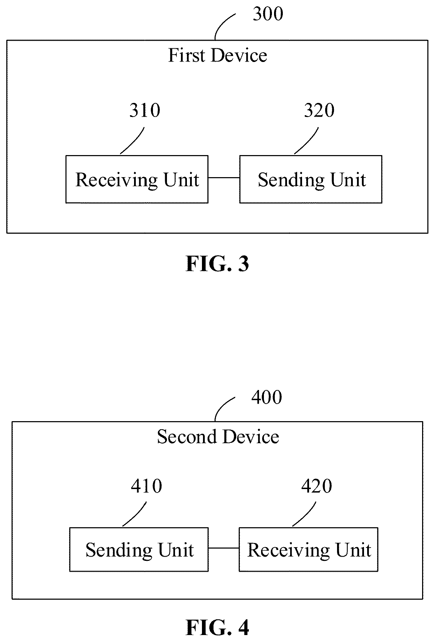

The method embodiments of the disclosure are described in detail above in conjunction with FIG. 2, and the apparatus embodiments of the disclosure are described in detail below in conjunction with FIGS. 3 to 6.

FIG. 3 is a schematic block diagram of a first device 300 of an embodiment of the disclosure.

As shown in FIG. 3, the first device 300 may include a receiving unit 310 and a sending unit 320.

The receiving unit 310 is configured to receive first control information sent by a second device.

Here, the first control information includes a first field and a second field, and the first field is configured to indicate to trigger the first device to perform aperiodic sounding reference signal (SRS) transmission based on at least one SRS resource set.

The sending unit 320 is configured to perform, for a first SRS resource set of the at least one SRS resource set, aperiodic SRS transmission on a first target slot based on the first SRS resource set.

Here, the first SRS resource set is an SRS resource set, which is configured with at least one slot offset, of the at least one SRS resource set; the first control information further includes the second field; the second field is configured to indicate a first slot offset, which corresponds to the first SRS resource set, of the at least one slot offset; and the first target slot is determined based on at least one of the first slot offset or a second slot offset.

In some embodiments, the sending unit 320 is further configured to:
determine the number of bits occupied by the second field.

In some embodiments, the sending unit 320 is specifically configured to:

determine that the second field occupies 0 bit in a case where first indicative information is not received by the first device; and/or
determine that the second field occupies 0 bit in a case where the second device does not send or configure the first indicative information.

Here, the first indicative information is configured to indicate that the first control information includes the second field, or the first indicative information is configured to indicate the number of bits occupied by the second field.

In some embodiments, the first indicative information is configured to indicate that the first control information includes the second field.

The sending unit 320 is specifically configured to:
determine that the second field occupies a first number of bits in a case where the first indicative information is received by the first device.

In some embodiments, the first indicative information is configured to indicate the number of bits occupied by the second field.

The sending unit 320 is specifically configured to:

determine that the second field occupies a second number of bits in a case where the first indicative information is received by the first device and the first indicative information indicates a first value; and/or
determine that the second field occupies a third number of bits in a case where the first indicative information is received by the first device and the first indicative information indicates a second value.

In some embodiments, the sending unit 320 is specifically configured to:
determine the number of bits occupied by the second field based on a first configuration field of a second SRS resource set of all SRS resource sets configured with the at least one slot offset.

Here, the first configuration field is configured to provide the at least one slot offset for the SRS resource set.

In some embodiments, the first configuration field is configured by at least one of a list structure, a sequence structure, or a bitmap.

In some embodiments, the second SRS resource set is an SRS resource set, which has the highest number of slot offsets configured by the first configuration field, of all the SRS resource sets configured with the at least one slot offset.

In some embodiments, the number of bits occupied by the second field and the number of slot offsets configured for the second resource set meet one of:

$$2^a \geq K, \text{ or } 2^a \geq K+1.$$

Here, a represents the number of bits occupied by the second field, and K represents the number of slot offsets configured for the second SRS resource set.

In some embodiments, the sending unit 320 is further configured to:

in a case where the number of the at least one slot offset is greater than or equal to the value of the second field, determine the X-th slot offset of the at least one slot offset as the first slot offset. Here, X represents the value of the second field, or X represents the value of the second field plus 1.

In some embodiments, the sending unit 320 is specifically configured to:

determine the X-th slot offset of the at least one slot offset as the first slot offset in an order from largest to smallest or from smallest to largest; or

determine the X-th slot offset of the at least one slot offset as the first slot offset in the configuration order of the at least one slot offset.

In some embodiments, the sending unit 320 is further configured to:

in a case where the number of the at least one slot offset is greater than or equal to the value of the second field, determine a slot offset corresponding to the value of the second field as the first slot offset based on a first correspondence.

Here, the first correspondence includes at least one value and a slot offset corresponding to each of the at least one value, and the at least one value includes the value of the second field.

In some embodiments, the first correspondence is agreed in a protocol or configured by the second device.

In some embodiments, the first correspondence is configured by radio resource control (RRC) signaling, or media access control control element (MAC CE).

In some embodiments, the sending unit 320 is specifically configured to:

in a case where the number of the at least one slot offset is less than or equal to the value of the second field, perform one of:

determining the (mod (Y, N))-th slot offset or the (mod (Y, N) + 1)-th slot offset of the at least one slot offset as the first slot offset, here, Y represents the value of the second field, or Y represents the value of the second field plus 1, N represents the number of the at least one slot offset, and mod represents a modulo operation;

determining the N-th slot offset of the at least one slot offset as the first slot offset;

determining the 1st slot offset of the at least one slot offset as the first slot offset;

determining the first slot offset as 0;

sending the first SRS resource set without considering the second field; or

sending the first SRS resource set without considering the first slot offset.

In some embodiments, the sending unit 320 is specifically configured to:

determine the (mod (Y, N))-th slot offset or the (mod (Y, N) + 1)-th slot offset of the at least one slot offset as the first slot offset in an order from largest to smallest or from smallest to largest; or

determine the (mod (Y, N))-th slot offset or the (mod (Y, N) + 1)-th slot offset of the at least one slot offset as the first slot offset in the configuration order of the at least one slot offset.

In some embodiments, each first SRS resource set of the at least one SRS resource set is configured with the same number of slot offsets; or each of the at least one SRS resource set is configured with the same number of slot offsets.

In some embodiments, the first SRS resource set is configured with $2^a$ slot offsets. Here, a represents the number of bits occupied by the second field.

In some embodiments, the sending unit 320 is further configured to:

determine the first target slot based on the first slot and the first slot offset.

Here, the first slot is determined by a slot where the first control information is located and the second slot offset.

In some embodiments, the sending unit 320 is specifically configured to:

determine the T-th available slot counting from the first slot or after the first slot as the first target slot. Here, T represents the first slot offset.

In some embodiments, the first device is not configured with a slot offset for a carrier aggregation (CA), and the first slot meets the following condition.

$$n_1 = \left\lfloor n \cdot \frac{2^{\mu_{SRS}}}{2^{\mu_{PDCCH}}} \right\rfloor + k$$

.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $n_1$ represents the first slot, and k represents the second slot offset.

In some embodiments, the first device is configured with a slot offset for a carrier aggregation (CA), and the first slot meets the following condition.

$$n_1 = \left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor$$

.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N^{CA}_{slot,\,offset,\,PDCCH}$ and $\mu_{offset,PDCCH}$ are $N^{CA}_{slot,\,offset}$ and $\mu_{offset}$ which depend on an upper layer configuration and are configured to receive a slot offset for the carrier aggregation (CA) of the physical downlink control channel (PDCCH), respectively, $N^{CA}_{slot,offset,SRS}$ and $\mu_{offset,SRS}$ are $N^{CA}_{slot,offset}$ and $\mu_{offset}$ which depend on the upper layer configuration and are configured to transmit a slot offset for the carrier aggregation (CA) of the SRS, respectively, $n_1$ represents the first slot, and k represents the second slot offset.

In some embodiments, the first device is not configured with a slot offset for a carrier aggregation (CA), and the first target slot meets the following condition.

$$n' = \left\lfloor n \cdot \frac{2^{\mu_{SRS}}}{2^{\mu_{PDCCH}}} \right\rfloor + k + z$$

.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, n' represents the first target slot, k represents the second slot offset, and z represents the number of slots to be offset determined based on the first slot offset.

In some embodiments, the z representing the number of slots to be offset determined based on the first slot offset includes: z representing the T-th available slot counting from $n_1$ or after $n_1$.

Here, T represents the first slot offset and $n_1$ meets the following condition.

$$n_1 = \left\lfloor n \cdot \frac{2^{\mu_{SRS}}}{2^{\mu_{PDCCH}}} \right\rfloor + k$$

.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $n_1$ represents the first slot, and k represents the second slot offset.

In some embodiments, the first device is configured with a slot offset for a carrier aggregation (CA), and the first target slot meets the following condition.

$$n' = \left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor + z$$
.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N^{CA}_{slot, offset, PDCCH}$ and $\mu_{offset,PDCCH}$ are $N^{CA}_{slot, offset}$ and $\mu_{offset}$ which depend on an upper layer configuration and are configured to receive a slot offset for the carrier aggregation (CA) of the physical downlink control channel (PDCCH), respectively, $N^{CA}_{slot,offset,SRS}$ and $\mu_{offset,SRS}$ are $N^{CA}_{slot,offset}$ and $\mu_{offset}$ which depend on the upper layer configuration and are configured to transmit a slot offset for the carrier aggregation (CA) of the SRS, respectively, n' represents the first target slot, k represents the second slot offset, and z represents the number of slots to be offset determined based on the first slot offset.

In some embodiments, the z representing the number of slots to be offset determined based on the first slot offset includes: z representing the T-th available slot counting from $n_1$ or after $n_1$.

Here, T represents the first slot offset and $n_1$ meets the following condition.

$$n_1 = \left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor$$
.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N^{CA}_{slot, offset, PDCCH}$ and $\mu_{offset,PDCCH}$ are $N^{CA}_{slot, offset}$ and $\mu_{offset}$ which depend on an upper layer configuration and are configured to receive a slot offset for the carrier aggregation (CA) of the physical downlink control channel (PDCCH), respectively, $N^{CA}_{slot,offset,SRS}$ and $\mu_{offset,SRS}$ are $N^{CA}_{slot,offset}$ and $\mu_{offset}$ which depend on the upper layer configuration and are configured to transmit a slot offset for the carrier aggregation (CA) of the SRS, respectively, $n_1$ represents the first slot, and k represents the second slot offset.

In some embodiments, the receiving unit 310 is further configured to:

receive configuration information sent by the second device. Here, the configuration information is configured to configure one or more SRS resource sets, each of the one or more SRS resource sets is configured with at least one SRS resource, and the one or more SRS resource sets includes the at least one SRS resource set.

In some embodiments, the at least one SRS resource set includes multiple SRS resource sets whose usage fields are configured as antenna switching, and different SRS resource sets of the multiple SRS resource sets correspond to different transmission slots.

In some embodiments, each of the multiple SRS resource sets is configured with a corresponding trigger state.

In some embodiments, the multiple SRS resource sets are configured with the same number of slot offsets.

In some embodiments, the sending unit 320 is further configured to:

report capability information of the first device.

Here, the capability information is configured to indicate that the first device supports configuring a first configuration field for an SRS resource set, and the first configuration field is configured to configure a slot offset for the SRS resource set; and/or the capability information is configured to indicate that the first device supports including the second field in control information; and/or the capability information is configured to indicate that the first device supports dynamic slot offset.

In some embodiments, the capability information is reported via radio resource control (RRC) signaling, or media access control control element (MAC CE).

In some embodiments, the sending unit 320 is specifically configured to:

report the capability information for each band combination;
report the capability information for each band range;
report the capability information for each band;
report the capability information for each carrier; or
report the capability information for each terminal device.
In some embodiments, the sending unit 320 is specifically configured to:
report the capability information for each band of the each band combination; or
report the capability information for each carrier on each band of the each band combination.

In some embodiments, the first control information is at least one of downlink control information format 0_1 (DCI format 0_1), downlink control information format 0_2 (DCI format 0_2), downlink control information format 1_1 (DCI format 1_1), downlink control information format 1_2 (DCI format 1_2), or downlink control information format 2_3 (DCI format 2_3).

In some embodiments, for a third SRS resource set of the at least one SRS resource set, aperiodic SRS transmission is performed on a second target slot based on the third SRS resource set.

Here, the third SRS resource set is an SRS resource set, which is not configured with the at least one slot offset, of the at least one SRS resource set; and the second target slot is determined based on the second slot offset.

In some embodiments, the first device is not configured with a slot offset for a carrier aggregation (CA), and the second target slot meets the following condition.

$$n' = \left\lfloor n \cdot \frac{2^{\mu_{SRS}}}{2^{\mu_{PDCCH}}} \right\rfloor + k$$ .

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, n' represents the second target slot, and k represents the second slot offset.

In some embodiments, the first device is configured with a slot offset for a carrier aggregation (CA), and the second target slot meets the following condition.

$$n' = \left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor$$ .

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N^{CA}_{slot, offset, PDCCH}$ and $\mu_{offset,PDCCH}$ are $N^{CA}_{slot, offset}$ and $\mu_{offset}$ which depend on an upper layer configuration and are configured to receive a slot offset for the carrier aggregation (CA) of the physical downlink control channel (PDCCH), respectively, $N^{CA}_{slot,offset,SRS}$ and $\mu_{offset,SRS}$ are $N^{CA}_{slot,offset}$ and $\mu_{offset}$ which depend on the upper layer configuration and are configured to transmit a slot offset for the carrier aggregation (CA) of the SRS, respectively, and n' represents the second target slot.

It is to be understood that the apparatus embodiments and the method embodiments may correspond to each other, and similar descriptions may refer to the method embodiments. Specifically, the first device 300 shown in FIG. 3 may correspond to the corresponding main body in executing the method 200 of the embodiments of the disclosure, and the aforementioned and other operations and/or functions of the various units in the first device 300 are respectively for the purpose of realizing the corresponding flows in the method shown in FIG. 2, which is not repeated here for the sake of brevity.

FIG. 4 is a schematic block diagram of a second device 400 of an embodiment of the disclosure.

As shown in FIG. 4, the second device 400 may include a sending unit 410 and a receiving unit 420.

The sending unit 410 is configured to send first control information to a first device.

Here, the first control information includes a first field and a second field, and the first field is configured to indicate to trigger the first device to perform aperiodic sounding reference signal (SRS) transmission based on at least one SRS resource set.

The receiving unit 420 is configured to perform, for a first SRS resource set of the at least one SRS resource set, aperiodic SRS transmission on a first target slot based on the first SRS resource set.

Here, the first SRS resource set is an SRS resource set, which is configured with at least one slot offset, of the at least one SRS resource set; the first control information further includes the second field; the second field is configured to indicate a first slot offset, which corresponds to the first SRS resource set, of the at least one slot offset; and the first target slot is determined based on at least one of the first slot offset or a second slot offset.

In some embodiments, the receiving unit 420 is further configured to:
determine the number of bits occupied by the second field.

In some embodiments, the sending unit 410 is further configured to:
send first indicative information to the first device.

Here, the first indicative information is configured for the first device to determine the number of bits occupied by the second field.

In some embodiments, the first indicative information is configured to indicate that the first control information includes the second field.

In some embodiments, the first indicative information is configured to indicate the number of bits occupied by the second field.

In some embodiments, the receiving unit 420 is specifically configured to:
determine the number of bits occupied by the second field based on a first configuration field of a second SRS resource set of all SRS resource sets configured with the at least one slot offset.

Here, the first configuration field is configured to provide the at least one slot offset for the SRS resource set.

In some embodiments, the first configuration field is configured by at least one of a list structure, a sequence structure, or a bitmap.

In some embodiments, the second SRS resource set is an SRS resource set, which has the highest number of slot offsets configured by the first configuration field, of all the SRS resource sets configured with the at least one slot offset.

In some embodiments, the number of bits occupied by the second field and the number of slot offsets configured for the second resource set meet one of:

$$2^a \geq K, \text{ or } 2^a \geq K+1.$$

Here, a represents the number of bits occupied by the second field, and K represents the number of slot offsets configured for the second SRS resource set.

In some embodiments, the receiving unit 420 is specifically configured to:
in a case where the number of the at least one slot offset is greater than or equal to the value of the second field, determine the X-th slot offset of the at least one slot offset as the first slot offset. Here, X represents the value of the second field, or X represents the value of the second field plus 1.

In some embodiments, the receiving unit 420 is specifically configured to:

determine the X-th slot offset of the at least one slot offset as the first slot offset in an order from largest to smallest or from smallest to largest; or
determine the X-th slot offset of the at least one slot offset as the first slot offset in the configuration order of the at least one slot offset.

In some embodiments, the receiving unit 420 is further configured to:
in a case where the number of the at least one slot offset is greater than or equal to the value of the second field, determine a slot offset corresponding to the value of the second field as the first slot offset based on a first correspondence.

Here, the first correspondence includes at least one value and a slot offset corresponding to each of the at least one value, and the at least one value includes the value of the second field.

In some embodiments, the first correspondence is agreed in a protocol or configured by the second device.

In some embodiments, the first correspondence is configured by radio resource control (RRC) signaling, or media access control control element (MAC CE).

In some embodiments, the receiving unit 420 is further configured to:
in a case where the number of the at least one slot offset is less than or equal to the value of the second field, perform one of:

determining the (mod (Y, N))-th slot offset or the (mod (Y, N) + 1)-th slot offset of the at least one slot offset as the first slot offset, here, Y represents the value of the second field, or Y represents the value of the second field plus 1, N represents the number of the at least one slot offset, and mod represents a modulo operation;

determining the N-th slot offset of the at least one slot offset as the first slot offset;

determining the first slot offset of the at least one slot offset as the first slot offset;

determining the first slot offset as 0;

sending the first SRS resource set without considering the second field; or

sending the first SRS resource set without considering the first slot offset.

In some embodiments, the receiving unit 420 is specifically configured to:

determine the (mod (Y, N))-th slot offset or the (mod (Y, N) + 1)-th slot offset of the at least one slot offset as the first slot offset in an order from largest to smallest or from smallest to largest; or

determine the (mod (Y, N))-th slot offset or the (mod (Y, N) + 1)-th slot offset of the at least one slot offset as the first slot offset in the configuration order of the at least one slot offset.

In some embodiments, each first SRS resource set of the at least one SRS resource set is configured with the same number of slot offsets; or each of the at least one SRS resource set is configured with the same number of slot offsets.

In some embodiments, the first SRS resource set is configured with $2^a$ slot offsets. Here, a represents the number of bits occupied by the second field.

In some embodiments, the receiving unit 420 is further configured to:

determine the first target slot based on the first slot and the first slot offset.

Here, the first slot is determined by a slot where the first control information is located and the second slot offset.

In some embodiments, the receiving unit 420 is specifically configured to:

determine the T-th available slot counting from the first slot or after the first slot as the first target slot. Here, T represents the first slot offset.

In some embodiments, the first device is not configured with a slot offset for a carrier aggregation (CA), and the first slot meets the following condition.

$$n_1 = \left\lfloor n \cdot \frac{2^{\mu_{SRS}}}{2^{\mu_{PDCCH}}} \right\rfloor + k \; .$$

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $n_1$ represents the first slot, and k represents the second slot offset.

In some embodiments, the first device is configured with a slot offset for a carrier aggregation (CA), and the first slot meets the following condition.

$$n_1 = \left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor \; .$$

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N_{slot, offset, PDCCH}^{CA}$ and $\mu_{offset,PDCCH}$ are $N_{slot, offset}^{CA}$ and $\mu_{offset}$ which depend on an upper layer configuration and are configured to receive a slot offset for the carrier aggregation (CA) of the physical downlink control channel (PDCCH), respectively, $N_{slot,offset,SRS}^{CA}$ and $\mu_{offset,SRS}$ are $N_{slot,offset}^{CA}$ and $\mu_{offset}$ which depend on the upper layer configuration and are configured to transmit a slot offset for the carrier aggregation (CA) of the SRS, respectively, $n_1$ represents the first slot, and k represents the second slot offset.

In some embodiments, the first device is not configured with a slot offset for a carrier aggregation (CA), and the first target slot meets the following condition.

$$n' = \left\lfloor n \cdot \frac{2^{\mu_{SRS}}}{2^{\mu_{PDCCH}}} \right\rfloor + k + z$$

.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, n' represents the first target slot, k represents the second slot offset, and z represents the number of slots to be offset determined based on the first slot offset.

In some embodiments, the z representing the number of slots to be offset determined based on the first slot offset includes: z representing the T-th available slot counting from $n_1$ or after $n_1$.

Here, T represents the first slot offset and $n_1$ meets the following condition.

$$n_1 = \left\lfloor n \cdot \frac{2^{\mu_{SRS}}}{2^{\mu_{PDCCH}}} \right\rfloor + k$$

.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $n_1$ represents the first slot, and k represents the second slot offset.

In some embodiments, the first device is configured with a slot offset for a carrier aggregation (CA), and the first target slot meets the following condition.

$$n' = \left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor + z$$

.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N_{slot,\,offset,\,PDCCH}^{CA}$ and $\mu_{offset,PDCCH}$ are $N_{slot,\,offset}^{CA}$ and $\mu_{offset}$ which depend on an upper layer configuration and are configured to receive a slot offset for the carrier aggregation (CA) of the physical downlink control channel (PDCCH), respectively, $N_{slot,offset,SRS}^{CA}$ and $\mu_{offset,SRS}$ are $N_{slot,offset}^{CA}$ and $\mu_{offset}$ which depend on the upper layer configuration and are configured to transmit a slot offset for the carrier aggregation (CA) of the SRS, respectively, n' represents the first target slot, k represents the second slot offset, and z represents the number of slots to be offset determined based on the first slot offset.

In some embodiments, the z representing the number of slots to be offset determined based on the first slot offset includes: z representing the T-th available slot counting from $n_1$ or after $n_1$.

Here, T represents the first slot offset and $n_1$ meets the following condition.

$$n_1 = \left\lfloor n \cdot \frac{2^{\mu_{SRS}}}{2^{\mu_{PDCCH}}} \right\rfloor + k + \left\lfloor \left( \frac{N_{slot,offset,PDCCH}^{CA}}{2^{\mu_{offset,PDCCH}}} - \frac{N_{slot,offset,SRS}^{CA}}{2^{\mu_{offset,SRS}}} \right) \cdot 2^{\mu_{SRS}} \right\rfloor$$

.

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N_{\text{slot, offset, PDCCH}}^{\text{CA}}$ and $\mu_{\text{offset,PDCCH}}$ are $N_{\text{slot, offset}}^{\text{CA}}$ and $\mu_{\text{offset}}$ which depend on an upper layer configuration and are configured to receive a slot offset for the carrier aggregation (CA) of the physical downlink control channel (PDCCH), respectively, $N_{slot,offset,SRS}^{CA}$ and $\mu_{offset,SRS}$ are $N_{slot,offset}^{CA}$ and $\mu_{offset}$ which depend on the upper layer configuration and are configured to transmit a slot offset for the carrier aggregation (CA) of the SRS, respectively, $n_1$ represents the first slot, and k represents the second slot offset.

In some embodiments, the sending unit 410 is further configured to:
send configuration information to the first device. Here, the configuration information is configured to configure one or more SRS resource sets, each of the one or more SRS resource sets is configured with at least one SRS resource, and the one or more SRS resource sets includes the at least one SRS resource set.

In some embodiments, the at least one SRS resource set includes multiple SRS resource sets whose usage fields are configured as antenna switching, and different SRS resource sets of the multiple SRS resource sets correspond to different transmission slots.

In some embodiments, each of the multiple SRS resource sets is configured with a corresponding trigger state.

In some embodiments, the multiple SRS resource sets are configured with the same number of slot offsets.

In some embodiments, the receiving unit 420 is further configured to:
receive capacity information reported by the first device.

Here, the capability information is configured to indicate that the first device supports configuring a first configuration field for an SRS resource set, and the first configuration field is configured to configure a slot offset for the SRS resource set; and/or the capability information is configured to indicate that the first device supports including the second field in control information; and/or the capability information is configured to indicate that the first device supports dynamic slot offset.

In some embodiments, the capability information is reported via radio resource control (RRC) signaling, or media access control control element (MAC CE).

In some embodiments, the receiving unit 420 is specifically configured to:

receive the capability information reported by the first device for each band combination;
receive the capability information reported by the first device for each band range;
receive the capability information reported by the first device for each band;
receive the capability information reported by the first device for each carrier; or
receive the capability information reported by the first device for each terminal device.
In some embodiments, the receiving unit 420 is specifically configured to:
receive the capability information reported by the first device for each band of the each band combination; or
receive the capability information reported by the first device for each carrier on each band of the each band combination.

In some embodiments, the first control information is at least one of downlink control information format 0_1 (DCI format 0_1), downlink control information format 0_2 (DCI format 0_2), downlink control information format 1_1 (DCI format 1_1), downlink control information format 1_2 (DCI format 1_2), or downlink control information format 2_3 (DCI format 2_3).

In some embodiments, for a third SRS resource set of the at least one SRS resource set, aperiodic SRS transmission is performed on a second target slot based on the third SRS resource set.

Here, the third SRS resource set is an SRS resource set, which is not configured with the at least one slot offset, of the at least one SRS resource set; and the second target slot is determined based on the second slot offset.

In some embodiments, the first device is not configured with a slot offset for a carrier aggregation (CA), and the second target slot meets the following condition.

$$n' = \left\lfloor n \cdot \frac{2^{\mu_{SRS}}}{2^{\mu_{PDCCH}}} \right\rfloor + k$$

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, n' represents the second target slot, and k represents the second slot offset.

In some embodiments, the first device is configured with a slot offset for a carrier aggregation (CA), and the second target slot meets the following condition.

$$n' = \left\lfloor n \cdot \frac{2^{\mu_{SRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right\rfloor.$$

Here, n represents the slot where the first control information is located, $\mu_{SRS}$ represents a subcarrier spacing configuration corresponding to the SRS, $\mu_{PDCCH}$ represents a subcarrier spacing configuration corresponding to a physical downlink control channel (PDCCH) used by the first control information, $N^{CA}_{slot, offset, PDCCH}$ and $\mu_{offset,PDCCH}$ are $N^{CA}_{slot, offset}$ and $\mu_{offset}$ which depend on an upper layer configuration and are configured to receive a slot offset for the carrier aggregation (CA) of the physical downlink control channel (PDCCH), respectively, $N^{CA}_{slot,offset,SRS}$ and $\mu_{offset,SRS}$ are $N^{CA}_{slot,offset}$ and $\mu_{offset}$ which depend on the upper layer configuration and are configured to transmit a slot offset for the carrier aggregation (CA) of the SRS, respectively, and n' represents the second target slot.

It is to be understood that the apparatus embodiments and the method embodiments may correspond to each other, and similar descriptions may refer to the method embodiments. Specifically, the second device 400 shown in FIG. 4 may correspond to the corresponding main body in executing the method 200 of the embodiments of the disclosure, and the aforementioned and other operations and/or functions of the various units in the second device 400 are respectively for the purpose of realizing the corresponding flows in the method shown in FIG. 2, which is not repeated here for the sake of brevity.

The communication device of the embodiments of the disclosure is described above from the perspective of functional modules in combination with the drawings. It is to be understood that the functional module may be implemented in a hardware form, by an instruction in a software form, and also by a combination of hardware and software modules. Specifically, each step of the method embodiments in the embodiments of the disclosure may be completed through an integrated logical circuit of hardware in a processor and/or an instruction in a software form. The steps of the method disclosed in combination with the embodiments of the disclosure may directly be embodied to be executed and completed by a hardware decoding processor or executed and completed by a combination of hardware and software modules in the decoding processor. Optionally, the software module may be located in a mature storage medium in the art, such as a Random Access Memory, a flash memory, a Read-Only Memory, a Programmable Read-Only Memory, an Electrically Erasable Programmable Memory or a register. The storage medium is located in a memory, and the processor reads the information in the memory to complete the steps of the above method embodiments in combination with its hardware.

For example, the processing unit and the communication unit referred to above may be implemented by a processor and a transceiver, respectively.

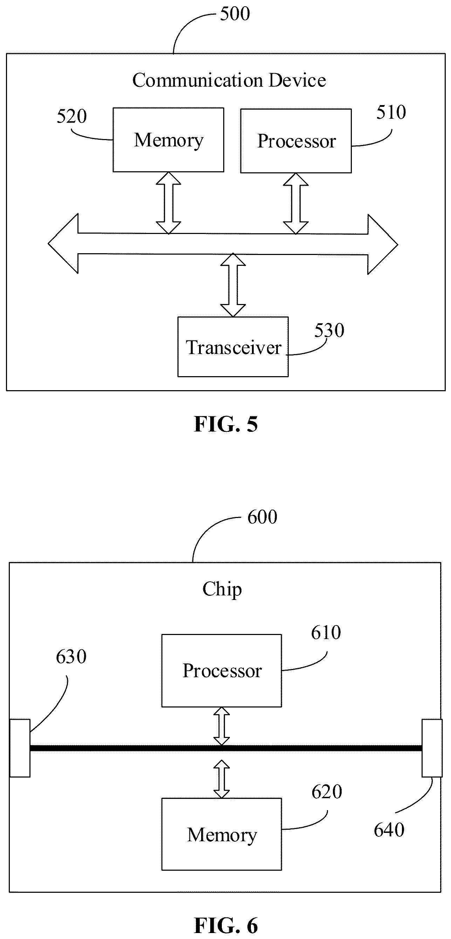

FIG. 5 is a schematic structural diagram of a communication device 500 of an embodiment of the disclosure.

As shown in FIG. 5, the communication device 500 may include a processor 510.

Here, the processor 510 may call and run a computer program in the memory to implement the method in the embodiments of the disclosure.

Referring to FIG. 5, the communication device 500 may further include a memory 520.

Here, the memory 520 may be configured to store indicative information, and may also be configured to store codes, instructions, or the like, which are executed by the processor 510. The processor 510 may call and run a computer program in the memory 520 to implement the method in the embodiments of the disclosure. The memory 520 may be a separate device independent of the processor 510, or may be integrated in the processor 510.

Referring to FIG. 5, the communication device 500 may further include a transceiver 530.

Here, the processor 510 may control the transceiver 530 to communicate with other devices, specifically, to send information or data to other devices, or to receive information or data sent by other devices. The transceiver 530 may include a transmitter and a receiver. The transceiver 530 may further include an antenna. The number of the antennas may be one or more.

It is to be understood that various components in the communication device 500 are connected through a bus system. Here, in addition to a data bus, the bus system further includes a power bus, a control bus, and a status signal bus.

It is further to be understood that the communication device 500 may be the first device of the embodiments of the disclosure. The communication device 500 may implement the corresponding flows implemented by the first device in each method of the embodiments of the disclosure, that is, the communication device 500 of the embodiments of the disclosure may correspond to the first device 300 in the embodiments of the disclosure, and may correspond to the corresponding main body in executing the method 200 of the embodiments of the disclosure, which is not repeated here for the sake of brevity. Similarly, the communication device 500 may be the second device of the embodiments of the disclosure, and the communication device 500 may implement the corresponding flows implemented by the second device in each method of the embodiments of the disclosure. That is, the communication device 500 of the embodiments of the disclosure may correspond to the second device 400 in the embodiments of the disclosure, and may also correspond to the main body in executing the method 200 of the embodiments of the disclosure, which is not repeated here for the sake of brevity.

In addition, the embodiments of the disclosure also provide a chip.

For example, the chip may be an integrated circuit chip with signal processing capability for implementing or executing each method, step, and logic block diagram disclosed in the embodiments of the disclosure. The chip may also be referred to as a system-level chip, a system chip, a chip system, a system-on-chip, or the like. Optionally, the chip may be applied to various communication devices, such that the communication device installed with the chip may execute each method, step and logic block diagram disclosed in the embodiments of the disclosure.

FIG. 6 is a schematic structural diagram of a chip 600 according to an embodiment of the disclosure.

Referring to FIG. 6, the chip 600 includes a processor 610.

Here, the processor 610 may call and run a computer program in the memory to implement the method in the embodiments of the disclosure.

Referring to FIG. 6, the chip 600 may further include a memory 620.

The processor 610 may call and run a computer program in the memory 620 to implement the method in the embodiments of the disclosure. The memory 620 may be configured to store indicative information, and may also be configured to store codes, instructions, or the like, which are executed by the processor 610. The memory 620 may be a separate device independent of the processor 610, or may be integrated in the processor 610.

Referring to FIG. 6, the chip 600 may further include an input interface 630.

Here, the processor 610 may control the input interface 630 to communicate with other devices or chips, specifically, to acquire information or data sent by other devices or chips.

Referring to FIG. 6, the chip 600 may further include an output interface 640.

Here, the processor 610 may control the output interface 640 to communicate with other devices or chips, specifically, to output information or data to other devices or chips.

It is to be understood that the chip 600 may be applied to the second device in the embodiment of the disclosure, and the chip may implement corresponding flows implemented by the second device in each method of the embodiments of the disclosure, and may also implement corresponding flows implemented by the first device in each method of the embodiments of the disclosure, which is not repeated here for the sake of brevity.

It is to be understood that various components in the chip 600 are connected through a bus system. Here, in addition to a data bus, the bus system further includes a power bus, a control bus, and a status signal bus.

The processor referred to above may include, but is not limited to:

a universal processor, a Digital Signal Processor (DSP), an Application Specific Integrated Circuit (ASIC), a Field Programmable Gate Array (FPGA) or other programmable logical devices, a discrete gate or a transistor logical device, a discrete hardware component, or the like.

The processor may be configured to implement or execute each method, step and logical block diagram disclosed in the embodiments of the disclosure. The steps of the method disclosed in combination with the embodiments of the disclosure may be directly embodied to be executed and completed by a hardware decoding processor or executed and completed by a combination of hardware and software modules in the decoding processor. The software module may be located in a mature storage medium in the art, such as a Random Access Memory, a flash memory, a Read-Only Memory, a Programmable Read-Only Memory, an Erasable Programmable Memory or a register. The storage medium is located in a memory, and the processor reads the information in the memory to complete the steps of the above method in combination with its hardware.

The memory referred to above includes, but is not limited to:

a volatile memory and/or a nonvolatile memory. Here, the nonvolatile memory may be a Read-Only Memory (ROM), a Programmable ROM (PROM), an Erasable PROM (EPROM), an Electrically EPROM (EEPROM) or a flash memory. The volatile memory may be a Random Access Memory (RAM), and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a synch link DRAM (SLDRAM) and a Direct Rambus RAM (DR RAM).

It is to be noted that the memory described herein is intended to include memories of these and any other proper types.

The embodiments of the disclosure further provide a computer-readable storage medium, which is configured to store a computer program. The computer-readable storage medium stores one or more programs including instructions. When executed by a portable electronic device including multiple application programs, the instructions enable the portable electronic device to execute the method of the embodiment shown in the method 200.

Optionally, the computer-readable storage medium may be applied to the second device in the embodiments of the disclosure, and the computer program enables a computer to execute corresponding flows implemented by the second device in each method of the embodiments of the disclosure, which is not repeated here for the sake of brevity.

Optionally, the computer-readable storage medium may be applied to the first device in the embodiments of the disclosure, and the computer program enables a computer to execute corresponding flows implemented by the first device in each method of the embodiments of the disclosure, which is not repeated here for the sake of brevity.

The embodiments of the disclosure further provide a computer program product, which includes a computer program.

Optionally, the computer program product may be applied to the second device in the embodiments of the disclosure, and the computer program enables a computer to execute corresponding flows implemented by the second device in each method of the embodiments of the disclosure, which is not repeated here for the sake of brevity.

Optionally, the computer program product may be applied to the first device in the embodiments of the disclosure, and the computer program enables a computer to execute corresponding flows implemented by the first device in each method of the embodiments of the disclosure, which is not repeated here for the sake of brevity.

The embodiments of the disclosure further provide a computer program. When executed by a computer, the computer program enables the computer to execute the method of the embodiment shown in the method 200.

Optionally, the computer program may be applied to the second device in the embodiments of the disclosure, and when the computer program runs in a computer, the computer program enables the computer to execute corresponding flows implemented by the second device in each method of the embodiments of the disclosure, which is not repeated here for the sake of brevity.

In addition, the embodiments of the disclosure further provide a communication system, which may include the above first device and second device to form a communication system 100 shown in FIG. 1, which is not repeated here for the sake of brevity. It is to be noted that the term "system" and the like herein may also be referred to as "network management architecture" or "network system", or the like.

It is further to be understood that the terms used in the embodiments and the appended claims of the disclosure are only for describing the specific embodiments and are not intended to limit the embodiments of the disclosure.

For example, singular forms "a/an", "said", "above" and "the" used in the embodiments and the appended claims of the disclosure are also intended to include plural forms unless other meanings are clearly expressed in the context.

Those skilled in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by using different methods, but such realization shall fall within the scope of the embodiments of the disclosure.

When realized in form of software functional unit and sold or used as an independent product, the function may be stored in a computer-readable storage medium. Based on such an understanding, the technical solutions of the embodiments of the disclosure substantially or parts making contributions to the conventional art or part of the technical solutions may be embodied in form of a software product, and the computer software product is stored in a storage medium, including multiple instructions configured to enable a computer device (which may be a personal computer, a server, a network device or the like) to execute all or part of the steps of the method in the embodiments of the disclosure. The aforementioned storage medium includes various media capable of storing program codes such as a USB disk, a mobile hard disk, a ROM, a RAM, a magnetic disk or an compact disk.

Those skilled in the art may clearly understand that for convenient and brief description, specific working processes of the system, apparatus and unit described above may refer to the corresponding processes in the aforementioned method embodiments and will not be repeated here.

In some embodiments configured by the disclosure, it is to be understood that the disclosed system, apparatus and method may be implemented in other manners. For example, the division of the units or modules or components in the apparatus embodiments described above is only logic function division, and other division manners may be adopted during practical implementation. For example, multiple units, modules or components may be combined or integrated into another system, or some units, modules or components may be neglected or not executed.

Further, for example, the units/modules/components described above as separate/display parts may or may not be physically separated, i.e., may be located in the same place, or may also be distributed to multiple network units. Part or all of the units/modules/components may be selected according to a practical requirement to achieve the purposes of the embodiments of the disclosure.

Finally, it is to be noted that, coupling or direct coupling or communication connection between each displayed or discussed component may be indirect coupling or communication connection through some interfaces, devices or units, and may be electrical, mechanical, or of other forms.

The above is only the specific implementations of the embodiments of the disclosure, but the scope of protection of the embodiments of the disclosure is not limited thereto. Any variations or replacements apparent to those skilled in the art within the technical scope disclosed by the embodiments of the disclosure shall fall within the scope of protection of the embodiments of the disclosure. Therefore, the scope of protection of the embodiments of the disclosure shall be subject to the scope of protection of the claims.

**Claims**

1. A wireless communication method, applied to a first device, comprising:

   receiving (S210) first control information sent by a second device;
   wherein the first control information comprises a first field, and the first field is configured to indicate to trigger the first device to perform aperiodic sounding reference signal, SRS, transmission based on at least one SRS resource set; and
   performing (S220), for a first SRS resource set of the at least one SRS resource set, aperiodic SRS transmission on a first target slot based on the first SRS resource set;
   wherein the first SRS resource set is an SRS resource set, which is configured with at least one slot offset, of the at least one SRS resource set; the first control information further comprises a second field; the second field is configured to indicate a first slot offset, which corresponds to the first SRS resource set, of the at least one slot offset; and the first target slot is determined based on at least one of the first slot offset or a second slot offset.

2. The method of claim 1, further comprising:
   determining a number of bits occupied by the second field.

3. The method of claim 2, wherein the determining the number of bits occupied by the second field comprises:

   determining the number of bits occupied by the second field based on a first configuration field of a second SRS resource set of all SRS resource sets configured with the at least one slot offset;
   wherein the first configuration field is configured to provide the at least one slot offset for the SRS resource set.

4. The method of claim 3, wherein the first configuration field is configured by at least one of a list structure, a sequence structure, or a bitmap.

5. The method of claim 3 or 4, wherein the second SRS resource set is an SRS resource set, which has a highest number of slot offsets configured by the first configuration field, of all the SRS resource sets configured with the at least one slot offset,
   preferably, the number of bits occupied by the second field and the number of slot offsets configured for the second resource set meet one of:

$$2^a \geq K, \text{ or } 2^a \geq K+1;$$

   wherein a represents the number of bits occupied by the second field, and K represents the number of slot offsets configured for the second SRS resource set.

6. The method of any one of claims 1 to 5, further comprising:
   in a case where the number of the at least one slot offset is less than or equal to a value of the second field, performing one of:

   determining a (mod (Y, N))-th slot offset or a (mod (Y, N) + 1)-th slot offset of the at least one slot offset as the first slot offset, wherein Y represents a value of the second field, or Y represents the value of the second field plus 1, N represents the number of the at least one slot offset, and mod represents a modulo operation;

determining an N-th slot offset of the at least one slot offset as the first slot offset;
determining a first slot offset of the at least one slot offset as the first slot offset;
determining the first slot offset as 0;
sending the first SRS resource set without considering the second field; or
sending the first SRS resource set without considering the first slot offset.

7. The method of any one of claims 1 to 6, wherein each first SRS resource set of the at least one SRS resource set is configured with a same number of slot offsets; or each of the at least one SRS resource set is configured with a same number of slot offsets.

8. The method of any one of claims 1 to 7, further comprising:

   determining the first target slot based on the first slot and the first slot offset;
   wherein the first slot is determined by a slot where the first control information is located and the second slot offset.

9. The method of any one of claims 1 to 8, further comprising:
   receiving configuration information sent by the second device, wherein the configuration information is configured to configure one or more SRS resource sets, each of the one or more SRS resource sets is configured with at least one SRS resource, and the one or more SRS resource sets comprises the at least one SRS resource set,

   preferably, the at least one SRS resource set comprises a plurality of SRS resource sets whose usage fields are configured as antenna switching, and different SRS resource sets of the plurality of SRS resource sets correspond to different transmission slots, and/or
   each of the plurality of SRS resource sets is configured with a corresponding trigger state.

10. The method of any one of claims 1 to 9, further comprising:

    reporting capability information of the first device;
    wherein the capability information is configured to indicate that the first device supports configuring a first configuration field for an SRS resource set, and the first configuration field is configured to configure a slot offset for the SRS resource set; and/or the capability information is configured to indicate that the first device supports comprising the second field in control information; and/or the capability information is configured to indicate that the first device supports dynamic slot offset.

11. The method of claim 10, wherein the capability information is reported via radio resource control, RRC, signaling, or media access control control element, MAC CE, and/or
    the reporting the capability information of the first device comprises one of:

    reporting the capability information for each band combination;
    reporting the capability information for each band range;
    reporting the capability information for each band;
    reporting the capability information for each carrier; or
    reporting the capability information for each terminal device.

12. The method of any one of claims 1 to 11, wherein the first control information is at least one of downlink control information format 0_1 (DCI format 0_1), downlink control information format 0_2 (DCI format 0_2), downlink control information format 1_1 (DCI format 1_1), downlink control information format 1_2 (DCI format 1_2), or downlink control information format 2_3 (DCI format 2_3).

13. A wireless communication method, applied to a second device, comprising:

    sending first control information to a first device;
    wherein the first control information comprises a first field and a second field, and the first field is configured to indicate to trigger the first device to perform aperiodic sounding reference signal (SRS) transmission based on at least one SRS resource set; and
    performing, for a first SRS resource set of the at least one SRS resource set, aperiodic SRS transmission on a first target slot based on the first SRS resource set;
    wherein the first SRS resource set is an SRS resource set, which is configured with at least one slot offset, of the at

**EP 4 697 828 A2**

least one SRS resource set; the first control information further comprises the second field; the second field is configured to indicate a first slot offset, which corresponds to the first SRS resource set, of the at least one slot offset; and the first target slot is determined based on at least one of the first slot offset or a second slot offset.

14. A first device, comprising:
a processor and a memory, wherein the memory is configured to store a computer program, and the processor is configured to call and run the computer program stored in the memory to execute the method of any one of claims 1 to 12.

15. A second device, comprising:
a processor and a memory, wherein the memory is configured to store a computer program, and the processor is configured to call and run the computer program stored in the memory to execute the method of claim 13.

50

<u>100</u>

130

110

110

120

**FIG. 1**

<u>200</u>

| First Device | | Second Device |

S210, First control information sent by a second device is received. Here, the first control information includes a first field and a second field, and the first field is configured to indicate to trigger the first device to perform aperiodic sounding reference signal (SRS) transmission based on at least one SRS resource set

S220, For a first SRS resource set of the at least one SRS resource set, aperiodic SRS transmission is performed on a first target slot based on the first SRS resource set. Here, the first SRS resource set is an SRS resource set, which is provided with at least one slot offset and a second slot offset, of the at least one SRS resource set; the first control information further includes the second field; the second field is configured to indicate a first slot offset, which corresponds to the first SRS resource set, of the at least one slot offset; and the first target slot is determined based on at least one of the first slot offset or the second slot offset

**FIG. 2**

300

First Device

310                              320

| Receiving Unit |—| Sending Unit |

**FIG. 3**

400

Second Device

410                              420

| Sending Unit |—| Receiving Unit |

**FIG. 4**

500

Communication Device

520

Memory

510

Processor

530

Transceiver

**FIG. 5**

600

Chip

610

630

Processor

620

Memory

640

**FIG. 6**